# EUROPEAN PATENT APPLICATION

(11) **EP 4 304 247 A1**
(43) Date of publication of application: **10.01.2024**
(21) Application number: 22778601.9
(22) Date of filing: 17.03.2022
(51) Int. Cl.: H04W 36/00

(54) **COMMUNICATION METHOD AND COMMUNICATION APPARATUS**

(30) Priority: 31.03.2021 CN 202110352827
(71) Applicant: Huawei Technologies Co., Ltd., Longgang Shenzhen, Guangdong 518129 (CN)
(72) Inventor: XU, Bin, Shenzhen, Guangdong 518129 (CN); LI, Bingzhao, Shenzhen, Guangdong 518129 (CN); CAO, Zhenzhen, Shenzhen, Guangdong 518129 (CN)
(74) Representative: Gill Jennings & Every LLP
(86) International application number: PCT/CN2022/081531
(87) International publication number: WO 2022/206418

(57) **Abstract**

This application provides a communication method and a communication apparatus. The method includes: An access network device receives first indication information from a core network device, where the first indication information indicates a value of a count COUNT of a first data packet (S701), and the COUNT includes a hyper frame number HFN and a packet data convergence protocol sequence number PDCP SN. The access network device determines the value of the COUNT of the first data packet based on the first indication information (S702). In this application, the access network device determines, based on the first indication information received from the core network device, the value of the COUNT corresponding to the data packet, to implement synchronization of values of PDCP SNs and synchronization of values of HFNs between different access network devices. This helps ensure normal transmission of a multicast and broadcast service, and improve communication reliability and stability.

## Description

This application claims priority to Chinese Patent Application No. 202110352827.9, filed with the China National Intellectual Property Administration on March 31, 2021 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

A multicast and broadcast service (multicast and broadcast service, MBS) is a service, for example, a live broadcast service, a public safety service, or a batch software update service, oriented to a plurality of terminal devices (user equipment, LTE). MBS data comes from a data server. First, the data server sends the MBS data to a core network device, then the core network device sends the MBS data to a base station, and finally the base station sends the MBS data to at least one UE that receives the MBS service. When the MBS data is sent from the core network to the base station, the MBS service is transmitted through a public transport channel MBS session. When the MBS data is sent from the base station to the UE, there are two transmission modes: a point to multipoint (point to multipoint, PTM) transmission mode and a point to point (point to point, PTP) transmission mode.

Generally, when the UE that receives the multicast and broadcast service needs to be handed over from one base station (for ease of description, referred to as a source base station for short) to another base station (for ease of description, referred to as a target base station for short) to continue to receive the multicast and broadcast service, because transmission progresses of the multicast and broadcast service may be different between different base stations, and packet data convergence protocol (packet data convergence protocol, PDCP) entities of the source base station and the target base station independently allocate PDCP sequence numbers (PDCP sequence numbers, PDCP SNs) of data packets of the multicast and broadcast service. Consequently, the source base station and the target base station cannot perform effective data forwarding based on transmission progresses on different base stations, and therefore a case in which data packets of the MBS may be lost in a handover process of the UE cannot be avoided.

### SUMMARY

This application provides a communication method and a communication apparatus, to help ensure normal transmission of a multicast or broadcast service, and improve communication reliability and stability.

According to a first aspect, this application provides a communication method. The method includes: receiving first indication information from a core network device, where the first indication information indicates a value of a count COUNT of a first data packet, and the COUNT includes a hyper frame number HFN and a packet data convergence protocol sequence number PDCP SN; and determining the value of the COUNT of the first data packet based on the first indication information.

In this application, an access network device receives the first indication information from a core network, and determines the value of the COUNT of the first data packet based on the value of the COUNT indicated by the first indication information. This can ensure synchronization of values of HFNs and PDCP SNs between different access network devices, and help implement normal transmission of a multicast and broadcast service in a handover scenario, and improve communication reliability and stability.

In a possible implementation, the receiving first indication information from a core network device includes: receiving the first data packet from the core network device, where the first data packet includes the first indication information.

In this application, the first indication information is carried in the first data packet to be sent to the access network device, so that signaling overheads can be reduced.

In a possible implementation, the first indication information is carried in a first field, and a length of the first field is 32 bits.

In this application, a new 32-bit field (namely, the first field) is designed to carry the first indication information, so that backward compatibility can be improved.

In a possible implementation, the first indication information is carried in a second field and a third field. The second field is a general packet radio service tunneling protocol-user plane sequence number GTP-U SN field, or the second field is a quality of service flow identifier sequence number QFI SN field.

In this application, a bit in the GTP-U SN field or the QFI SN field is reused, and a new field (namely, the third field) is designed to jointly carry the third indication information. This has little impact on an existing protocol, and is easy to implement.

In a possible implementation, a sum of lengths of the second field and the third field is 32 bits.

According to a second aspect, this application provides a communication method. The method includes: determining first indication information, where the first indication information indicates a value of a count COUNT of a first data packet, and the COUNT includes a hyper frame number HFN and a packet data convergence protocol sequence number PDCP SN; and sending the first indication information to an access network device.

In a possible implementation, the sending the first indication information to an access network device includes: sending the first data packet to the access network device, where the first data packet includes the first indication information.

In a possible implementation, the first indication information is carried in a first field, and a length of the first field is 32 bits.

In a possible implementation, the first indication information is carried in a second field and a third field. The second field is a general packet radio service tunneling protocol-user plane sequence number GTP-U SN field, or the second field is a quality of service flow identifier sequence number QFI SN field.

In a possible implementation, a sum of lengths of the second field and the third field is 32 bits.

According to a third aspect, this application provides a communication method. The method includes: receiving second indication information, where the second indication information indicates a value of a first COUNT of a data packet, and the value of the first COUNT includes a value of a first hyper frame number HFN and a value of a first packet data convergence protocol sequence number PDCP SN; and determining a value of a second COUNT based on a value of a second HFN and the value of the first PDCP SN, and sending a second data packet to a terminal device, where the value of the second COUNT is a value of a COUNT of the second data packet, and the value of the second HFN is a value of an HFN maintained by a first access network device.

In this application, the first access network device determines the value of the second COUNT based on the value of the first PDCP SN included in the value of the first COUNT indicated by the received second indication information and the value (namely, the value of the second HFN) of the HFN maintained by the first access network device, and sends the data packet to the terminal device based on the value of the second COUNT. In this way, when the value of the HFN maintained by the first access network device is not synchronized with a value of an HFN maintained by another device (for example, the terminal device or a second access network device), normal transmission of a multicast and broadcast service is not affected, to help improve communication reliability and stability.

In a possible implementation, the receiving second indication information includes: receiving a PDCP status report from the terminal device, where the PDCP status report includes the second indication information.

In this application, the first access network device receives the second indication information from the terminal device, so that when the value of the HFN of the first access network device is not synchronized with the value of the HFN of the terminal device, retransmission/transmission of the data packet of the multicast and broadcast service between the first access network device and the terminal device is not affected, to help improve communication reliability and stability.

In a possible implementation, the receiving second indication information includes: receiving sequence number status transfer information SN Status Transfer from a second access network device, where the SN Status Transfer includes the second indication information, the first access network device is a target access network device of the terminal device, and the second access network device is a source access network device of the terminal device.

In this application, when the terminal device is handed over from the second access network device to the first access network device, the first access network device receives the second indication information from the second access network device. In this way, when the value of the HFN of the second access network device is not synchronized with the value of the HFN of the first access network device, transmission of the multicast and broadcast service between the first access network device and the terminal device is not affected, to help improve communication reliability and stability.

According to a fourth aspect, this application provides a communication method. The method includes: determining a value of a third hyper frame number HFN; receiving a data packet from a first access network device, where the data packet includes a value of a packet data convergence protocol sequence number PDCP SN; and determining, based on the value of the third HFN and the value of the PDCP SN, a value of a COUNT corresponding to the data packet.

In this application, after a terminal device is handed over from one access network device (namely, a second access network device) to another access network device (namely, the first access network device), when a value of an HFN maintained by the terminal device is not synchronized with a value of an HFN maintained by the first access network device, because the first access network device does not know the value of the HFN on the terminal device side, namely, a value of a COUNT, the value of the COUNT of the terminal device may be greater than that of the first access network device. Consequently, COUNT loopback occurs on the terminal device earlier than that on the first access network device, affecting normal transmission of a multicast and broadcast service between the first access network device and the terminal device. Based on this, the terminal device may determine a third HFN (the third HFN is an initial value or a value that is the same as the value of the HFN maintained by the first access network device), and update, to the third HFN, the value of the HFN originally maintained by the terminal device. This can avoid the case in which COUNT loopback occurs on the terminal device earlier than that on the first access network device, to improve a transmission success rate of the multicast and broadcast service.

In a possible implementation, the determining a value of a third HFN includes: being handed over from a second access network device to the first access network device, and initializing a value of an HFN maintained by the terminal device, to obtain the value of the third HFN.

In this application, after the terminal device is handed over to a target access network device (namely, the first access network device), the terminal device initializes, to an initial value 0, the value of the HFN maintained by the terminal device, to ensure that the value of the HFN maintained by the terminal device is not greater than the value of the HFN maintained by the target access network device. This avoids affecting normal transmission of the multicast and broadcast service between the first access network device and the terminal device due to the case in which COUNT loopback occurs on the terminal device earlier than that on the first access network device.

In a possible implementation, the method further includes: being handed over from a second access network device to the first access network device; and the determining a value of a third HFN includes: receiving the value of the third HFN from the second access network device, where the value of the third HFN is a value of an HFN maintained by the first access network device.

In this application, in a handover process in which the terminal device is handed over from the second access network device to the first access network device, the first access network device sends, to the second access network device, the value of the HFN maintained by the first access network device, and then the second access network device sends, to the terminal device, the value of the HFN maintained by the first access network device. In this way, the terminal device may update, based on the received value of the HFN maintained by the first access network device, the HFN maintained by the terminal device, to keep the value of the HFN maintained by the terminal device consistent with the value of the HFN maintained by the first access network device.

In a possible implementation, the receiving the value of the third HFN from the second access network device includes: receiving a handover command from the second access network device, where the handover command includes the value of the third HFN.

In this application, in the handover process in which the terminal device is handed over from the second access network device to the first access network device, the first access network device carries, in a handover request response message, the value of the HFN maintained by the first access network device, to send the HFN to the second access network device, and then the second access network device sends, to the terminal device by using the handover command, the value of the HFN maintained by the first access network device. In this way, the terminal device updates, based on a value of an HFN in the handover command, the value of the HFN maintained by the terminal device, to keep the value of the HFN maintained by the terminal device consistent with the value of the HFN maintained by the first access network device.

According to a fifth aspect, this application provides a communication method. The method includes: A first access network device determines third indication information, where the third indication information indicates a value of a hyper frame number HFN maintained by the first access network device; and the first access network device sends the third indication information to a second access network device, where the first access network device is a target access network device of a terminal device, and the second access network device is a source access network device of the terminal device.

In a possible implementation, that the first access network device sends the third indication information to a second access network device includes: The first access network device sends a handover request response message to the second access network device, where the handover request response message includes the third indication information.

According to a sixth aspect, this application provides a communication method. The method includes: A second access network device receives third indication information from a first access network device, where the third indication information indicates a value of a hyper frame number HFN maintained by the first access network device; and the second access network device sends, to a terminal device, the value of the HFN maintained by the first access network device, where the first access network device is a target access network device of the terminal device, and the second access network device is a source access network device of the terminal device.

In a possible implementation, that a second access network device receives third indication information from a first access network device includes: The second access network device receives a handover request response message from the first access network device, where the handover request response message includes the third indication information.

In a possible implementation, that the second access network device sends, to a terminal device, the value of the HFN maintained by the first access network device includes: The second access network device sends a handover command to the terminal device, where the handover command includes the value of the HFN maintained by the first access network device.

According to a seventh aspect, this application provides a communication method. The method includes: A terminal device is handed over from a second access network device to a first access network device; and before a value of a COUNT of the terminal device reaches a maximum value of the COUNT, the terminal device sends fourth indication information to the first access network device, where the fourth indication information indicates that the value of the COUNT of the terminal device reaches the maximum value; or before a value of a COUNT of the terminal device reaches a maximum value of the COUNT, the terminal device initializes a value of a hyper frame number HFN of the terminal device, or the terminal device updates a value of an HFN to a preset value.

In this application, before the value of the COUNT of the terminal device reaches the maximum value, the terminal device sends indication information (namely, the fourth indication information) to the first access network device, to notify the first access network device that the value of the COUNT of the terminal device reaches the maximum value. In this way, the first access network device may be triggered to reestablish a PDCP entity, to avoid a case in which loopback occurs on the value of the COUNT of the terminal device earlier than that on the value of the COUNT of a first terminal device. Alternatively, before the value of the COUNT of the terminal device reaches the maximum value, the terminal device initializes the value of the HFN or sets the currently maintained value of the HFN to a preset value. This can also avoid a case in which loopback occurs on the COUNT of the terminal device earlier than that on the COUNT of the first terminal device, and applicability is high.

According to an eighth aspect, this application provides a communication method. The method includes: receiving fifth indication information from a core network device, where the fifth indication information indicates a sequence of a third data packet in at least one data packet; and determining, based on the fifth indication information, a value of a packet data convergence protocol sequence number PDCP SN corresponding to the third data packet.

In this application, an access network device receives the fifth indication information from a core network, and determines the value of the PDCP SN in the first data packet based on a value of indicated by the first indication information. This can ensure synchronization of values of PDCP SNs between different access network devices (in other words, different access network devices allocate a same PDCP SN to a same data packet), and help implement normal transmission of a multicast and broadcast service in a handover scenario, and improve communication reliability and stability.

In a possible implementation, the receiving fifth indication information from a core network device includes:
receiving the third data packet from the core network device, where the third data packet includes the fifth indication information.

In this application, the fifth indication information is carried in the third data packet to be sent to the access network device, so that signaling overheads can be reduced.

In a possible implementation, the fifth indication information is a value of a general packet radio service tunneling protocol-user plane sequence number GTP-U SN, or the fifth indication information is a value of a quality of service flow identifier sequence number QFI SN; and the determining, based on the fifth indication information, a value of a PDCP SN corresponding to the third data packet includes: determining, based on the value indicated by the fifth indication information and a first value, the value of the PDCP SN corresponding to the third data packet; or the value of the PDCP SN corresponding to the third data packet is equal to the value indicated by the fifth indication information.

In this application, the access network device sets, by reusing a value of a GTP-U SN or a value of a QFI SN carried in a header of the data packet, the value of the PDCP SN corresponding to the data packet. This has little impact on an existing protocol, and is easy to implement.

In a possible implementation, the determining, based on the value indicated by the fifth indication information and a first value, the value of the PDCP SN corresponding to the third data packet includes: The value of the PDCP SN corresponding to the third data packet is a remainder obtained by dividing, by the first value, the value indicated by the fifth indication information. The first value meets: A = 2^{H}. Herein, A is the first value, and H is a length of the PDCP SN.

In this application, when the length (18 bits or 12 bits) of the PDCP SN configured by the access network device is less than a length (24 bits) of the QFI SN, or the length (12 bits) of the PDCP SN configured by the access network device is less than a length (16 bits) of the GTP-U SN, the remainder obtained by dividing, by the first value, the value indicated by the fifth indication information included in the data packet is determined as the value of the PDCP SN corresponding to the data packet. This improves applicability of the solution.

In a possible implementation, the method further includes: sending sixth indication information to a terminal device, where the sixth indication information indicates a second value, and the second value is an effective length of the PDCP SN.

In this application, when the length (for example, 18 bits) of the PDCP SN configured by the access network device is greater than the length (16 bits) of the GTP-U SN, and the value of the PDCP SN of the access network device is configured based on the value of the GTP-U SN, the effective length of the PDCP SN is 16 bits. In this way, the access network device needs to send, to the terminal device, the sixth indication information indicating the effective length of the PDCP SN, to notify the terminal device that the effective length of the PDCP SN in the data packet is 16 bits.

In a possible implementation, a length of a hyper frame number HFN is a difference between a preset length and the second value, and the preset length is a length of a count COUNT.

In this application, when the effective length of the PDCP SN is 16 bits, the length of the HFN is 16 bits.

In a possible implementation, the method further includes:
determining that a fourth data packet is a next to-be-sent data packet;
determining, based on the second value and a value of a COUNT of the next to-be-sent data packet, a value of a PDCP SN corresponding to the fourth data packet; and
generating a fifth data packet based on the fourth data packet and the value of the PDCP SN corresponding to the fourth data packet, and sending the fifth data packet to the terminal device.

In this application, when an effective length of the PDCP SN is 16 bits, if the value of the PDCP SN needs to be determined based on the value of the COUNT, the value of the PDCP SN included in the value of the COUNT needs to be determined based on information indicating that the effective length of the PDCP SN is 16 bits.

In a possible implementation, the value of the PDCP SN corresponding to the fourth data packet meets:
Y = X mod 2^{L}. Herein, Y is the value of the PDCP SN corresponding to the fourth data packet, X is the value of the COUNT of the next to-be-sent data packet, and L is the second value.

In a possible implementation, the value of the PDCP SN corresponding to the third data packet is carried in a PDCP SN field of the packet header of the third data packet, where a bit in the PDCP SN field other than a bit used to carry the value of the PDCP SN corresponding to the third data packet is set to 0, set to 1, or used as a reserved bit.

In this application, when the effective length of the PDCP SN is 16 bits, 16 bits in an 18-bit PDCP SN field in an existing PDCP PDU format are reused to carry the value of the PDCP SN, and other two bits in the 18 bits other than the bits used to carry the value of the PDCP SN are set to 0, set to 1, or used as reserved bits. This has little impact on an existing protocol, and is easy to implement.

In a possible implementation, the value of the PDCP SN corresponding to the third data packet is carried in a fourth field of the packet header of the third data packet, and a length of the fourth field is equal to the second value.

In this application, when the effective length of the PDCP SN is 16 bits, a new PDCP PDU format is designed, and therefore a length of a field (namely, the fourth field) used to carry the value of the PDCP SN is 16 bits. This can improve applicability of the solution.

In a possible implementation, a value range of the PDCP SN in the data packet is [0, 2^{L}-1], where L is the second value.

According to a ninth aspect, this application provides a communication method. The method includes: determining a second value, where the second value is an effective length of a packet data convergence protocol sequence number PDCP SN; and determining a size of a reordering window, and/or a length of a hyper frame number HFN, and/or a value range of the PDCP SN in a data packet based on the second value.

In this application, when a length (for example, 18 bits) of the PDCP SN configured by an access network device is greater than a length (16 bits) of a GTP-U SN, and a value of the PDCP SN of the access network device is configured based on a value of the GTP-U SN, the effective length of the PDCP SN is 16 bits. In this case, the terminal device determines the second value (namely, 16 bits) indicating the effective length of the PDCP SN. The terminal device may determine, based on the second value, parameters such as the size of the reordering window, and/or the length of the hyper frame number HFN, and/or the value range of the PDCP SN in the data packet.

In a possible implementation, the determining a second value includes: receiving sixth indication information from an access network device, where the sixth indication information indicates the second value.

In this application, the terminal device receives, from the access network device, the second value (namely, 16 bits) indicating the effective length of the PDCP SN, and then the terminal device may determine, based on the second value, the parameters such as the size of the reordering window, and/or the length of the hyper frame number HFN, and/or the value range of the PDCP SN in the data packet.

In a possible implementation, the size of the reordering window meets: RW = 2^{L-1}. Herein, RW is the size of the reordering window, and L is the second value.

In a possible implementation, the length of the HFN is a difference between a preset length and the second value, and the preset length is a length of a count COUNT.

In a possible implementation, a value range of the PDCP SN in the data packet is [0, 2^{L}-1], where L is the second value.

In a possible implementation, the method further includes: receiving a fifth data packet from the access network device, where the fifth data packet includes a value of a second PDCP SN; and determining, based on the second value and the value of the second PDCP SN, a value of a third PDCP SN corresponding to the fifth data packet.

In this application, when the effective length of the PDCP SN of the terminal device is inconsistent with a length of the PDCP SN in the received data packet, the terminal device needs to calculate, based on the value of the PDCP SN in the received data packet and the effective length (namely, the second value) of the PDCP SN, the value of the PDCP SN corresponding to the data packet in the terminal device.

In a possible implementation, the value of the third PDCP SN meets: M = N mod 2^{L}. Herein, M is the value of the third PDCP SN, N is the value of the second PDCP SN, and L is the second value.

According to a tenth aspect, this application provides a communication apparatus. The communication apparatus is an access network device. The apparatus includes: a transceiver unit, configured to receive first indication information from a core network device, where the first indication information indicates a value of a count COUNT of a first data packet, and the COUNT includes a hyper frame number HFN and a packet data convergence protocol sequence number PDCP SN; and a processing unit, configured to determine the value of the COUNT of the first data packet based on the first indication information.

In a possible implementation, the transceiver unit is specifically configured to:
receive the first data packet from the core network device, where the first data packet includes the first indication information.

In a possible implementation, the first indication information is carried in a first field, and a length of the first field is 32 bits.

In a possible implementation, the first indication information is carried in a second field and a third field. The second field is a general packet radio service tunneling protocol-user plane sequence number GTP-U SN field, or the second field is a quality of service flow identifier sequence number QFI SN field.

In a possible implementation, a sum of lengths of the second field and the third field is 32 bits.

According to an eleventh aspect, this application provides a communication apparatus. The communication apparatus is a core network device. The apparatus includes: a processing unit, configured to determine first indication information, where the first indication information indicates a value of a count COUNT of a first data packet, and the COUNT includes a hyper frame number HFN and a packet data convergence protocol sequence number PDCP SN; and a transceiver unit, configured to send the first indication information to an access network device.

In a possible implementation, the transceiver unit is specifically configured to:
send the first data packet to the access network device, where the first data packet includes the first indication information.

In a possible implementation, the first indication information is carried in a first field, and a length of the first field is 32 bits.

In a possible implementation, the first indication information is carried in a second field and a third field. The second field is a general packet radio service tunneling protocol-user plane sequence number GTP-U SN field, or the second field is a quality of service flow identifier sequence number QFI SN field.

In a possible implementation, a sum of lengths of the second field and the third field is 32 bits.

According to a twelfth aspect, this application provides a communication apparatus. The communication apparatus is an access network device. The apparatus includes: a transceiver unit, configured to receive second indication information, where the second indication information indicates a value of a first COUNT of a data packet, and the value of the first COUNT includes a value of a hyper frame number HFN and a value of a packet data convergence protocol sequence number PDCP SN; and a processing unit, configured to determine a value of a second COUNT based on a value of a second HFN and the value of the first PDCP SN. The transceiver unit is further configured to send a second data packet to a terminal device, where the value of the second COUNT is a value of a COUNT of the second data packet, and the value of the second HFN is a value of an HFN maintained by a first access network device.

In a possible implementation, the transceiver unit is configured to:
receive a PDCP status report from the terminal device, where the PDCP status report includes the second indication information.

In a possible implementation, the transceiver unit is configured to:
receive sequence number status transfer information SN Status Transfer from a second access network device, where the SN Status Transfer includes the second indication information, the first access network device is a target access network device of the terminal device, and the second access network device is a source access network device of the terminal device.

According to a thirteenth aspect, this application provides a communication apparatus. The communication apparatus is a terminal device. The apparatus includes: a processing unit, configured to determine a value of a third hyper frame number HFN; and a transceiver unit, configured to receive a data packet from a first access network device, where the data packet includes a value of a packet data convergence protocol sequence number PDCP SN. The processing unit is configured to determine, based on the value of the third HFN and the value of the PDCP SN, a value of a COUNT corresponding to the data packet.

In a possible implementation, the processing unit is specifically configured to:
be handed over from a second access network device to the first access network device and initialize a value of an HFN maintained by the terminal device, to obtain the value of the third HFN.

In a possible implementation, the processing unit is further configured to be handed over from a second access network device to the first access network device. The processing unit is further configured to receive the value of the third HFN from the second access network device by using the transceiver unit, where the value of the third HFN is a value of an HFN maintained by the first access network device.

In a possible implementation, the transceiver unit is further configured to receive a handover command from the second access network device, where the handover command includes the value of the third HFN.

According to a fourteenth aspect, this application provides a communication apparatus. The communication apparatus is a first access network device. The apparatus includes: a processing unit, configured to determine third indication information, where the third indication information indicates a value of a hyper frame number HFN maintained by the first access network device; and a transceiver unit, configured to send the third indication information to a second access network device, where the first access network device is a target access network device of a terminal device, and the second access network device is a source access network device of the terminal device.

In a possible implementation, the transceiver unit is configured to send a handover request response message to the second access network device, where the handover request response message includes the third indication information.

According to a fifteenth aspect, this application provides a communication apparatus. The communication apparatus is a second access network device. The apparatus includes: a transceiver unit, configured to receive third indication information from a first access network device, where the third indication information indicates a value of a hyper frame number HFN maintained by the first access network device. The transceiver unit is further configured to send, to a terminal device, the value of the HFN maintained by the first access network device, where the first access network device is a target access network device of the terminal device, and the second access network device is a source access network device of the terminal device.

In a possible implementation, the transceiver unit is configured to receive a handover request response message from the first access network device, where the handover request response message includes the third indication information.

In a possible implementation, the transceiver unit is configured to send a handover command to the terminal device, where the handover command includes the value of the HFN maintained by the first access network device.

According to a sixteenth aspect, this application provides a communication apparatus. The communication apparatus is a terminal device. The apparatus includes: a transceiver unit, configured to: when the terminal device is handed over from a second access network device to a first access network device, send fourth indication information to the first access network device before a value of a COUNT of the terminal device reaches a maximum value of the COUNT, where the fourth indication information indicates that the value of the COUNT of the terminal device reaches the maximum value; or
a processing unit, configured to: before a value of a COUNT of the terminal device reaches a maximum value of the COUNT, initialize a value of a hyper frame number HFN of the terminal device, or update a value of an HFN to a preset value.

According to a seventeenth aspect, this application provides a communication apparatus. The communication apparatus is a core network device. The apparatus includes:
a transceiver unit, configured to receive fifth indication information from the core network device, where the fifth indication information indicates a sequence of a third data packet in at least one data packet; and
a processing unit, configured to determine, based on the fifth indication information, a value of a packet data convergence protocol sequence number PDCP SN corresponding to the third data packet.

In a possible implementation, the transceiver unit is configured to:
receive the third data packet from the core network device, where the third data packet includes the fifth indication information.

In a possible implementation, the fifth indication information is a value of a general packet radio service tunneling protocol-user plane sequence number GTP-U SN, or the fifth indication information is a value of a quality of service flow identifier sequence number QFI SN. The processing unit is configured to:
determine, based on the value indicated by the fifth indication information and a first value, the value of the PDCP SN corresponding to the third data packet; or
the value of the PDCP SN corresponding to the third data packet is equal to the value indicated by the fifth indication information.

In a possible implementation, the processing unit is specifically configured to:
the value of the PDCP SN corresponding to the third data packet is a remainder obtained by dividing, by the first value, the value indicated by the fifth indication information. The first value meets: A = 2^{H}. Herein, A is the first value, and H is a length of the PDCP SN.

In a possible implementation, the transceiver unit is further specifically configured to:
send sixth indication information to a terminal device, where the sixth indication information indicates a second value, and the second value is an effective length of the PDCP SN.

In a possible implementation, a length of a hyper frame number HFN is a difference between a preset length and the second value, and the preset length is a length of a count COUNT.

In a possible implementation, the processing unit is further configured to determine that a fourth data packet is a next to-be-sent data packet. The processing unit is further configured to determine, based on the second value and a value of a COUNT of the next to-be-sent data packet, a value of a PDCP SN corresponding to the fourth data packet. The processing unit is further configured to generate a fifth data packet based on the fourth data packet and the value of the PDCP SN corresponding to the fourth data packet. The transceiver unit is further configured to send the fifth data packet to the terminal device.

In a possible implementation, the value of the PDCP SN corresponding to the fourth data packet meets:
Y = X mod 2^{L}. Herein, Y is the value of the PDCP SN corresponding to the fourth data packet, X is the value of the COUNT of the next to-be-sent data packet, and L is the second value.

In a possible implementation, the value of the PDCP SN corresponding to the third data packet is carried in a PDCP SN field of a packet header of the third data packet, where a bit in the PDCP SN field other than a bit used to carry the value of the PDCP SN corresponding to the third data packet is set to 0, set to 1, or used as a reserved bit.

In a possible implementation, the value of the PDCP SN corresponding to the third data packet is carried in a fourth field of a packet header of the third data packet, and a length of the fourth field is equal to the second value.

In a possible implementation, a value range of the PDCP SN in the data packet is [0, 2^{L}-1], where L is the second value.

According to an eighteenth aspect, this application provides a communication apparatus. The communication apparatus is a terminal device. The apparatus includes: a processing unit, configured to determine a second value, where the second value is an effective length of a packet data convergence protocol sequence number PDCP SN. The processing unit is further configured to determine a size of a reordering window, and/or a length of a hyper frame number HFN, and/or a value range of the PDCP SN in a data packet based on the second value.

In a possible implementation, the processing unit is configured to receive sixth indication information from an access network device by using a transceiver unit, where the sixth indication information indicates the second value.

In a possible implementation, the size of the reordering window meets: RW = 2^{L-1}. Herein, RW is the size of the reordering window, and L is the second value.

In a possible implementation, the length of the HFN is a difference between a preset length and the second value, and the preset length is a length of a count COUNT.

In a possible implementation, a value range of the PDCP SN in the data packet is [0, 2^{L}-1], where L is the second value.

In a possible implementation, the transceiver unit is further configured to receive a fifth data packet from the access network device, where the fifth data packet includes a value of a second PDCP SN. The processing unit is further configured to determine determining, based on the second value and the value of the second PDCP SN, a value of a third PDCP SN corresponding to the fifth data packet.

In a possible implementation, the value of the third PDCP SN meets: M = N mod 2^{L}. Herein, M is the value of the third PDCP SN, N is the value of the second PDCP SN, and L is the second value.

According to a nineteenth aspect, this application provides a communication apparatus. The apparatus may be a terminal device, or may be an apparatus in a terminal device, or may be an apparatus that can be used together with a terminal device. The communication apparatus may alternatively be a chip system. The communication apparatus may perform the method according to the fourth aspect, the seventh aspect, or the ninth aspect. A function of the communication apparatus may be implemented by hardware, or may be implemented by hardware by executing corresponding software. The hardware or the software includes one or more units or modules corresponding to the foregoing function. The units or modules may be software and/or hardware. For operations performed by the communication apparatus and beneficial effects thereof, refer to the method according to the fourth aspect, the seventh aspect, or the ninth aspect, and the beneficial effects thereof. No repeated description is provided.

According to a twentieth aspect, this application provides a communication apparatus. The apparatus may be an access network device (for example, the first access network device or the second access network device), or may be an apparatus in an access network device, or may be an apparatus that can be used together with an access network device. The communication apparatus may alternatively be a chip system. The communication apparatus may perform the method according to the first aspect, the third aspect, the fifth aspect, the sixth aspect, or the eighth aspect. A function of the communication apparatus may be implemented by hardware, or may be implemented by hardware by executing corresponding software. The hardware or the software includes one or more units or modules corresponding to the foregoing function. The units or modules may be software and/or hardware. For operations performed by the communication apparatus and beneficial effects thereof, refer to the method according to the first aspect, the third aspect, the fifth aspect, the sixth aspect, or the eighth aspect, and the beneficial effects thereof. No repeated description is provided.

According to a twenty-first aspect, this application provides a communication apparatus. The apparatus may be a core network device, or may be an apparatus in a core network device, or may be an apparatus that can be used together with a core network device. The communication apparatus may alternatively be a chip system. The communication apparatus may perform the method according to the second aspect. A function of the communication apparatus may be implemented by hardware, or may be implemented by hardware by executing corresponding software. The hardware or the software includes one or more units or modules corresponding to the foregoing function. The units or modules may be software and/or hardware. For operations performed by the communication apparatus and beneficial effects thereof, refer to the method according to the second aspect and the beneficial effects thereof. No repeated description is provided.

According to a twenty-second aspect, this application provides a communication apparatus. The communication apparatus includes a processor. The processor is configured to execute a computer program or instructions that is/are stored in at least one memory, so that the apparatus implements the method according to any one of the first aspect to the ninth aspect.

According to a twenty-third aspect, this application provides a communication apparatus. The communication apparatus includes a processor and a memory, the processor is coupled to the memory, and the processor is configured to implement the method according to any one of the first aspect to the ninth aspect.

According to a twenty-fourth aspect, this application provides a computer-readable storage medium. The storage medium stores a computer program or instructions. When the computer program or the instructions is/are executed by a computer, the method according to any one of the first aspect to the ninth aspect is implemented.

According to a twenty-fifth aspect, this application provides a computer program product including instructions. The computer program product includes computer program code. When the computer program code is run on a computer, the method according to any one of the first aspect to the ninth aspect is implemented.

### BRIEF DESCRIPTION OF DRAWINGS

FIG. 1a is a schematic diagram of a 5G network architecture;
FIG. 1b is a schematic diagram of downlink data transmission between layers;
FIG. 1c is a schematic diagram of a CU-DU split architecture;
FIG. 1d is a schematic diagram of another CU-DU split architecture;
FIG. 1e is a schematic diagram of distribution of air interface protocol stacks;
FIG. 2 is a schematic diagram of an MBS service transmission process;
FIG. 3a is a schematic diagram of MBS data packet transmission;
FIG. 3b is a schematic diagram of other MBS data packet transmission;
FIG. 3c is a schematic diagram of other MBS data packet transmission;
FIG. 4 is a schematic diagram of a structure of a COUNT;
FIG. 5 is a schematic diagram of a handover procedure;
FIG. 6 is a schematic diagram of a scenario in which UE that receives a multicast and broadcast service is handed over;
FIG. 7 is a schematic flowchart of a communication method according to an embodiment of this application;
FIG. 8 is a schematic diagram of a structure of a second field and a third field according to an embodiment of this application;
FIG. 9 is a schematic diagram of another structure of a second field and a third field according to an embodiment of this application;
FIG. 10 is a schematic diagram of an application scenario of determining a value of a COUNT of a first data packet according to an embodiment of this application;
FIG. 11 is another schematic flowchart of a communication method according to an embodiment of this application;
FIG. 12 is a schematic diagram of setting a PDCP SN based on fifth indication information according to an embodiment of this application;
FIG. 13 is another schematic flowchart of a communication method according to an embodiment of this application;
FIG. 14 is a schematic diagram of an application scenario of determining a value of a second COUNT according to an embodiment of this application;
FIG. 15a is a schematic diagram of a scenario in which HFNs between an access network device and a terminal device are not synchronized according to an embodiment of this application;
FIG. 15b is a schematic diagram of a scenario in which values of HFNs between different access network devices are not synchronized according to an embodiment of this application;
FIG. 16 is another schematic flowchart of a communication method according to an embodiment of this application;
FIG. 17 is a schematic diagram of a structure of a communication apparatus according to an embodiment of this application; and
FIG. 18 is a schematic diagram of a structure of another communication apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". For example, A/B may indicate A or B. A term "and/or" in this specification describes only an association relationship between associated objects and indicates that there may be three relationships. For example, A and/or B may indicate the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

In this application, the word such as "example" or "for example" is used to represent giving an example, an illustration, or a description. Any embodiment or design scheme described as an "example" or "for example" in this application should not be explained as being more preferred or having more advantages than another embodiment or design scheme. To be precise, the word such as "example" or "for example" is intended to present a related concept in a specific manner.

The technical solutions in embodiments of this application may be applied to various communication systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, and a future communication system. This is not limited herein.

For ease of understanding, the 5G system in embodiments of this application is used as an example. The following describes in detail related network elements in the 5G system.

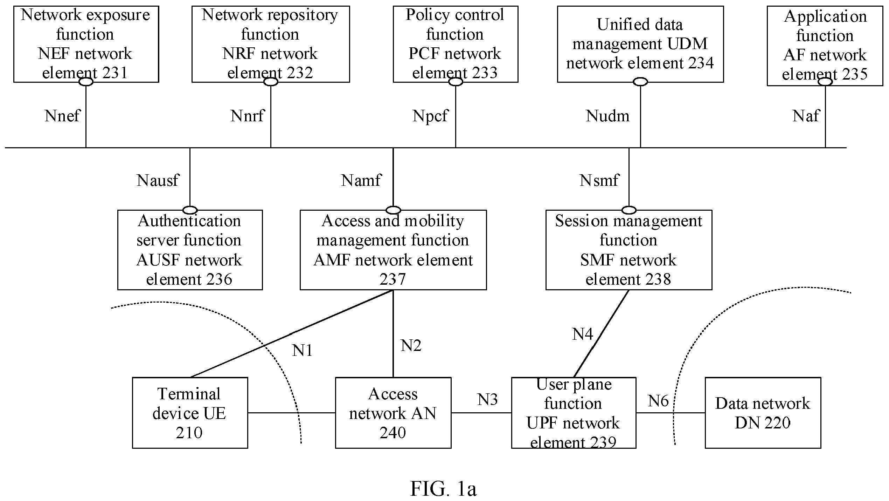

FIG. 1a is a schematic diagram of a 5G network architecture according to an embodiment of this application. As shown in FIG. 1a, the network architecture may include a terminal device part, a (radio) access network ((radio) access network, (R)AN), a core network (core network, CN), and a data network (data network, DN). The (R)AN (hereinafter described as a RAN) is used to enable the terminal device to access a wireless network, and the CN is used to manage the terminal device and provide a gateway for communicating with the DN.

The following separately describes in detail the terminal device, the RAN, the CN, and the DN in FIG. 1a.

### 1. Terminal device

The terminal device part in FIG. 1a includes a terminal device 210, and the terminal device 210 may also be referred to as user equipment (user equipment, UE). The terminal device 210 in embodiments of this application is a device having a wireless transceiver function, and may communicate with network elements of one or more core networks (core networks, CNs) through an access network device in an access network (access network, AN) 240. The terminal device 210 may also be referred to as an access terminal, a terminal, a subscriber unit, a subscriber station, a mobile station, a remote station, a remote terminal, a mobile device, a user terminal, a wireless network device, a user agent, a user apparatus, or the like. The terminal device 210 may be deployed on land, including an indoor or outdoor device, a handheld device, or a vehicle-mounted device; or may be deployed on water (for example, on a ship); or may be deployed in the air (for example, on a plane, a balloon, or a satellite). The terminal device 210 may be a cellular phone, a cordless phone, a session initiation protocol (session initiation protocol, SIP) phone, a smartphone, a mobile phone, a wireless local loop (wireless local loop, WLL) station, a personal digital assistant (personal digital assistant, PDA), a handheld device having a wireless communication function, a computing device, another device connected to a wireless modem, a vehicle-mounted device, a wearable device, an unmanned aerial vehicle device, a terminal in the Internet of Things or the Internet of Vehicles, a terminal in any form in a fifth generation (fifth generation, 5G) mobile communication network and a future network, relay user equipment, a terminal in a future evolved public land mobile network (public land mobile network, PLMN), or the like. The relay user equipment may be, for example, a 5G residential gateway (residential gateway, RG). For example, the terminal device 210 may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid (smart grid), a wireless terminal in transportation safety, a wireless terminal in a smart city, a wireless terminal in a smart home, or the like. This is not limited in this embodiment of this application.

### 2. RAN

As shown in FIG. 1a, the RAN includes an access network device 240. It should be learned that the RAN may include one or more RAN devices (or access network devices), and an interface between the access network device and the terminal device may be a Uu interface (or referred to as an air interface). Certainly, in future communication, names of these interfaces may remain unchanged, or may be replaced with other names. This is not limited in this application.

The access network device is a node or a device that enables the terminal device to access the wireless network. The access network device includes, for example, but is not limited to, a new generation NodeB (generation NodeB, gNB) in a 5G communication system, an evolved NodeB (evolved NodeB, eNB), a next-generation evolved NodeB (next-generation eNB, ng-eNB), a wireless backhaul device, a radio network controller (radio network controller, RNC), a NodeB (NodeB, NB), a base station controller (base station controller, BSC), a base transceiver station (base transceiver station, BTS), a home NodeB ((home evolved NodeB, HeNB) or (home NodeB, HNB)), a baseband unit (baseband unit, BBU), a transmit/receive point (transmitting and receiving point, TRP), a transmit point (transmitting point, TP), or a mobile switching center. This is not limited herein. In addition, the access network device may alternatively be a base station in a 6G communication system, or an open base station (Open RAN) or a cloud base station (Cloud RAN). In an open RAN, an interface between access network devices or within an access network device in the present invention may become an internal interface of the open RAN. A procedure and information exchange between these internal interfaces may be implemented by using software or a program. Therefore, the technical solutions of the present invention are also applicable to an open RAN architecture, provided that an implementation idea is the same as or similar to the solutions of the present invention, in other words, the implementation idea falls within the protection scope of the present invention. In embodiments of this application, the access network device may be a base station. The solutions provided in embodiments of this application are described by using examples.

### (1) Protocol layer structure

Communication between the access network device and the terminal device is performed in accordance with a specific protocol layer structure. For example, a control plane protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, and a physical layer (Physical Layer, PHY). A user plane protocol layer structure may include a PDCP layer, an RLC layer, a MAC layer, and a physical layer. In a possible implementation, a service data adaptation protocol (service data adaptation protocol, SDAP) layer may be included above the PDCP layer.

Data transmission between the access network device and the terminal device is used as an example. The data transmission needs to go through the user plane protocol layer such as the SDAP layer, the PDCP layer, the RLC layer, the MAC layer, and the physical layer. The SDAP layer, the PDCP layer, the RLC layer, the MAC layer, and the physical layer are also collectively referred to as an access stratum. For example, at least one data radio bearer (data radio bearer, DRB) is established between the access network device and the terminal device for data transmission. Each DRB may correspond to a group of function entity sets, for example, include one PDCP layer entity, at least one RLC layer entity corresponding to the PDCP layer entity, at least one MAC layer entity corresponding to the at least one RLC layer entity, and at least one physical layer entity corresponding to the at least one MAC layer entity. It should be noted that at least one signaling radio bearer (signaling radio bearer, SRB) may be established between the access network device and the terminal device for signaling transmission. The DRB and the SRB are collectively referred to as a radio bearer (radio bearer, RB). In other words, processing on a data packet at each layer in the access network device and the terminal device may be combined to be referred to as the radio bearer. Each piece of data in the radio bearer needs to be processed at each layer, and each layer has a corresponding function entity to perform a corresponding function, for example, a PDCP entity at the PDCP layer.

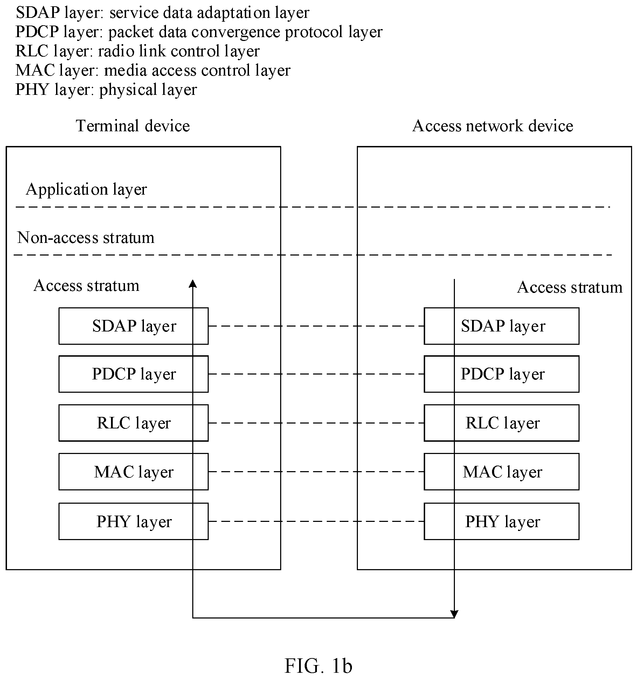

Downlink data transmission is used as an example. FIG. 1b is a schematic diagram of downlink data transmission between layers. In FIG. 1b, a downward arrow represents data sending, and an upward arrow represents data receiving. After obtaining data from an upper layer, the SDAP layer entity may map the data to a PDCP layer entity of a corresponding DRB based on a quality of service flow identifier (QoS flow indicator, QFI) of the data. The PDCP layer entity may transmit the data to at least one RLC layer entity corresponding to the PDCP layer entity, and then the at least one RLC layer entity transmits the data to a corresponding MAC layer entity. Then, the MAC layer entity generates a transport block, and a corresponding physical layer entity wirelessly transmits the transport block. The data is correspondingly encapsulated at each layer. Data received by a layer from an upper layer of the layer is considered as a service data unit (service data unit, SDU) of the layer. After being encapsulated at the layer, the data becomes a protocol data unit (protocol data unit, PDU), and is then transmitted to a next layer. For example, data received by the PDCP layer entity from an upper layer is referred to as a PDCP SDU, and data sent by the PDCP layer entity to a lower layer is referred to as a PDCP PDU. Data received by the RLC layer entity from an upper layer is referred to as an RLC SDU, and data sent by the RLC layer entity to a lower layer is referred to as an RLC PDU. Data may be transmitted between different layers through corresponding channels. For example, data may be transmitted between the RLC layer entity and the MAC layer entity through a logical channel (logical channel, LCH), and data may be transmitted between the MAC layer entity and the physical layer entity through a transport channel (transport channel). It may be understood that the downlink data may be MBS service data, for example, may be live broadcast service data, public safety service data, or batch software update service data. This is not limited herein. That is, for the MBS service, a data transmission direction is from the access network device to the terminal device.

For example, it can be further learned from FIG. 1b that the terminal device further has an application layer and a non-access stratum. The application layer may be used to provide a service for an application installed on the terminal device. For example, downlink data received by the terminal device may be sequentially transmitted from a physical layer to the application layer, and then is provided by the application layer for the application. For another example, the application layer may obtain data generated by the application, sequentially transmit the data to a physical layer, and send the data to another communication apparatus. The non-access stratum may be used to forward user data, for example, forward uplink data received from the application layer to a SDAP layer, or forwards downlink data received from a SDAP layer to the application layer.

### (2) CU and DU

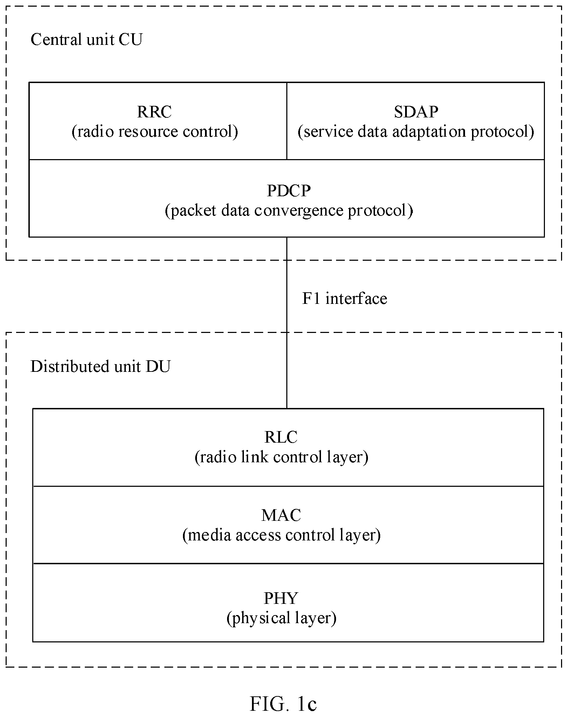

In embodiments of this application, the access network device may include one or more central units (central units, CUs) and one or more distributed units (distributed units, DUs). A plurality of DUs may be controlled by one CU in a centralized manner, or one DU may be connected to a plurality of CUs. For example, an interface between the CU and the DU may be referred to as an F1 interface. A control plane (control panel, CP) interface may be an F1-C interface, and a user plane (user panel, UP) interface may be an F1-U interface. Division may be performed for the CU and the DU based on protocol layers of a wireless network. For example, FIG. 1c is a schematic diagram of a CU-DU split architecture. Functions of a PDCP layer and a protocol layer above the PDCP layer are set on the CU, and functions of protocol layers below the PDCP layer (for example, an RLC layer and a MAC layer) are set on the DU.

It may be understood that, division of processing functions of the CU and the DU based on the protocol layers is merely an example, and the processing functions may alternatively be divided in another manner. For example, functions of protocol layers above the RLC layer are set on the CU, and functions of the RLC layer and protocol layers below the RLC layer are set on the DU. For another example, functions having more protocol layers may be divided for the CU or the DU. For another example, some processing functions having the protocol layers may be divided for the CU or the DU. In a design, some functions of the RLC layer and functions of the protocol layers above the RLC layer are set on the CU, and remaining functions of the RLC layer and functions of the protocol layers below the RLC layer are set on the DU. In another design, division of functions of the CU or the DU may alternatively be performed based on a service type or another system requirement. For example, division may be performed based on a delay. Functions whose processing time needs to meet a delay requirement are set on the DU, and functions whose processing time does not need to meet the delay requirement are set on the CU. In another design, the CU may alternatively have one or more functions of the core network. For example, the CU may be set on a network side for ease of centralized management; and the DU may have a plurality of radio frequency functions, or radio frequency functions may be set remotely. This is not limited in embodiments of this application.

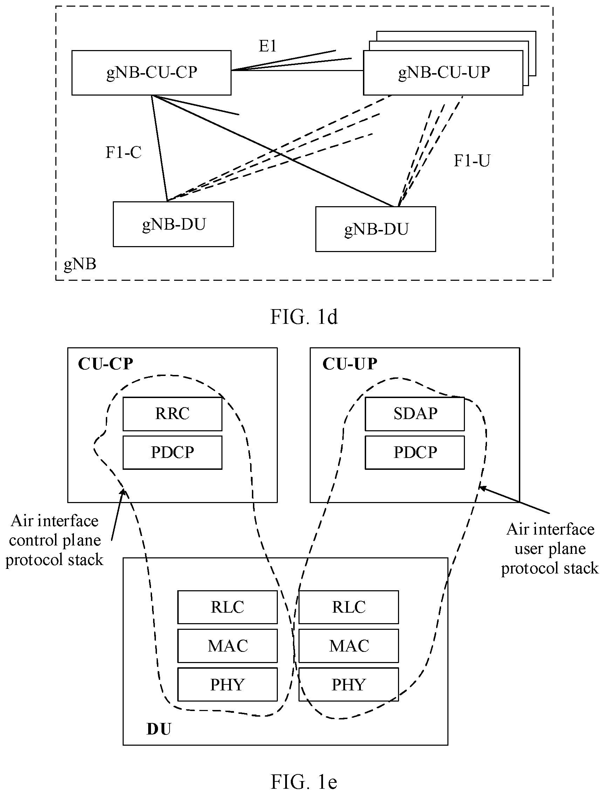

For example, the functions of the CU may be implemented by one entity or different entities. For example, FIG. 1d is a schematic diagram of another CU-DU split architecture. The functions of the CU may be further divided. To be specific, a control plane and a user plane are separated, and are implemented by using different entities: a control plane CU entity (namely, a CU-CP entity) and a user plane CU entity (namely, a CU-UP entity). The CU-CP entity and the CU-UP entity may be coupled to the DU, to jointly complete a function of the RAN device. An interface between the CU-CP entity and the CU-UP entity may be an E1 interface, an interface between the CU-CP entity and the DU may be an F1-C interface, and an interface between the CU-UP entity and the DU may be an F1-U interface. One DU and one CU-UP may be connected to one CU-CP. Under control of a same CU-CP, one DU may be connected to a plurality of CU-UPs, and one CU-UP may be connected to a plurality of DUs.

Based on FIG. 1d, FIG. 1e is a schematic diagram of distribution of air interface protocol stacks. As shown in FIG. 1e, for both the user plane and the control plane, the air interface protocol stack may be that the RLC layer, the MAC layer, and the PHY layer are on the DU, and the PDCP layer and a protocol layer above the PDCP layer are on the CU.

It should be noted that, in the architectures shown in FIG. 1c to FIG. 1e, signaling generated by the CU may be sent to the terminal device through the DU, or signaling generated by the terminal device may be sent to the CU through the DU. The DU may transparently transmit the signaling to the terminal device or the CU by directly encapsulating the signaling at a protocol layer without parsing the signaling. In the following embodiments, if transmission of such signaling between the DU and the terminal device is included, sending or receiving of the signaling by the DU includes this scenario. For example, signaling at the RRC layer or the PDCP layer is finally processed as data at the physical layer and sent to the terminal device, or is converted from received data at the physical layer. In this architecture, it may also be considered that the signaling at the RRC layer or the PDCP layer is sent by the DU, or sent by the DU and a radio frequency apparatus.

### 3. CN

As shown in FIG. 1a, the CN includes a network exposure function (network exposure function, NEF) network element 231, a network repository function (network repository function, NRF) network element 232, a policy control function (policy control function, PCF) network element 233, a unified data management (unified data management, UDM) network element 234, an application function (application function, AF) network element 235, an authentication server function (authentication server function, AUSF) network element 236, an access and mobility management function (access and mobility management function, AMF) network element 237, a session management function (session management function, SMF) network element 238, a user plane function (user plane function, UPF) network element 239, and (radio). For ease of description, in embodiments of this application, an access network device (which may also be referred to as a base station) mentioned below is described by using a RAN as an example. In embodiments of this application, a core network device mentioned below may be understood as a general term for function network elements of the CN.

The AMF network element is a control plane network element provided by an operator network, and is responsible for access control and mobility management for accessing the operator network by the terminal device, for example, including functions such as mobility status management, allocation of a temporary user identity, and user authentication and authorization.

The SMF network element is a control plane network element provided by the operator network, and is responsible for managing a PDU session of the terminal device. The PDU session is a channel for transmitting a PDU, and the PDU needs to be transmitted between the terminal device and the DN through the PDU session. The SMF network element is responsible for establishment, maintenance, deletion, and the like of the PDU session. The SMF network element includes functions related to a session, for example, session management (for example, session establishment, modification, and release, including tunnel maintenance between the UPF and the RAN), selection and control of the UPF network element, service and session continuity (service and session continuity, SSC) mode selection, and roaming.

The UPF network element is a gateway provided by an operator, and is a gateway for communication between the operator network and the DN. The UPF network element includes functions related to a user plane, for example, data packet routing and transmission, packet inspection, handling for quality of service (quality of service, QoS), lawful intercept, uplink packet detection, and downlink data packet storage.

The PCF network element is a control plane function provided by the operator, and is configured to provide a policy of the PDU session for the SMF network element. The policy may include a charging-related policy, a QoS-related policy, an authorization-related policy, and the like.

The AF network element is a function network element configured to provide various business services, and can interact with a core network through another network element and interact with a policy management framework to perform policy management.

In addition, although not shown, the CN may further include another possible network element, for example, a network exposure function (network exposure function, NEF) network element or a unified data repository (unified data repository, UDR) network element.

### 4. DN

As shown in FIG. 1a, a data network DN 220 may also be referred to as a packet data network (packet data network, PDN), and is usually a network outside the operator network, for example, a third-party network. The operator network may access a plurality of data networks DNs 220. A plurality of services may be deployed on the data network DN 220, and the data network DN 220 may provide services such as data and/or a voice for the terminal device 210. For example, the data network DN 220 may be a private network of a smart factory, and a sensor installed in a workshop of the smart factory may be the terminal device 210. A control server of the sensor is deployed in the data network DN 220, and the control server may provide a service for the sensor. The sensor may communicate with the control server, to obtain instructions of the control server, transmit collected data of the sensor to the control server based on the instructions, and the like. For another example, the data network DN 220 may be an internal office network of a company, and a mobile phone or a computer of an employee of the company may be the terminal device 210. The mobile phone or the computer of the employee may access information, data resources, and the like on the internal office network of the company.

In FIG. 1a, Nnef, Nausf, Nnrf, Namf, Npcf, Nudm, Nsmf, Naf, N1, N2, N3, N4, and N6 are interface sequence numbers. For meanings of these interface sequence numbers, refer to meanings defined in a related standard protocol. This is not limited herein.

It may be understood that the 5G communication system is used as an example for illustration in FIG. 1a. The solutions in embodiments of this application are further applicable to another possible communication system, for example, an LTE communication system or a future 6th generation (the 6th generation, 6G) communication system. The foregoing network elements or functions may be network elements in a hardware device, may be software functions run on dedicated hardware, or may be virtualization functions instantiated on a platform (for example, a cloud platform). Optionally, the foregoing network elements or functions may be implemented by one device, may be implemented by a plurality of devices, or may be one functional module in one device. This is not specifically limited in embodiments of this application.

It may be further understood that the core network device, the access network device, and the terminal device in this application all support the 3rd generation partnership project (3rd generation partnership project, 3GPP) technical specification (technical specification, TS) 38.415, 3GPP TS 29.281, another communication protocol, or the like. This is not limited herein.

The following provides descriptions by using an example in which a data network DN is a multicast and broadcast service (Multicast and Broadcast Service, MBS). It may be understood that the MBS is a service, for example, a live broadcast service, a public safety service, or a batch software update service, oriented to a plurality of LTEs.

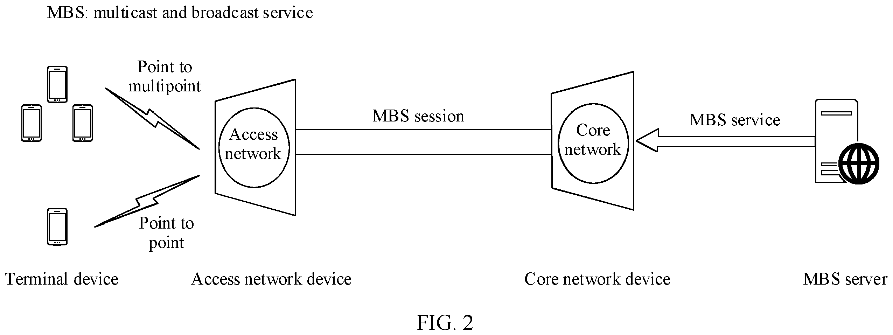

FIG. 2 is a schematic diagram of an MBS service transmission process. As shown in FIG. 2, MBS data (for example, the MBS data may be live broadcast service data, public safety service data, or batch software update service data) comes from a data server. First, the data server sends the MBS data to a core network device, then the core network device sends the MBS data to an access network device, and finally the access network device sends the MBS data to at least one UE that receives the MBS service. When the MBS data is sent from the core network device to the access network device, the MBS service is transmitted through a public transport channel MBS session. When the MBS data is sent from the access network device to the LTE, there are two transmission modes: a PTM (point to multipoint, PTM) transmission mode and a PTP (point to point, PTP) transmission mode.

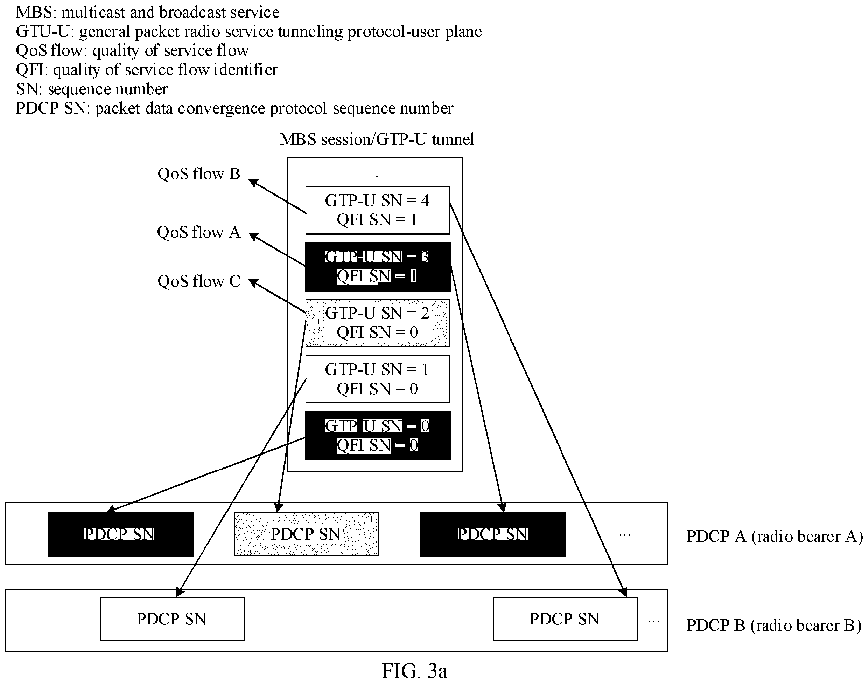

It may be understood that when the MBS service is sent from the core network device to the access network device, the MBS service may be transmitted through a shared MBS session. One MBS session corresponds to one transport channel (for example, a general packet radio service tunneling protocol-user plane (gprs tunneling protocol-u, GTP-U) tunnel or an N3 interface), and the one MBS session may include one or more quality of service flows (quality of service flows, QoS flows). For ease of understanding, FIG. 3a is a schematic diagram of MBS data packet transmission. As shown in FIG. 3a, it is assumed that one MBS session/GTP-U tunnel includes three QoS flows: a QoS flow A, a QoS flow B, and a QoS flow C. A data packet of each QoS flow carries a general packet radio service tunneling protocol-user plane sequence number (gprs tunneling protocol-u sequence number, GTP-U SN). The GTP-U SN does not distinguish between QoS flows, and increases in ascending order. As shown in FIG. 3a, in the MBS session/GTP-U tunnel, GTP-U SNs in data packets are 0, 1, 2, 3, 4, ..., and n from bottom to top. Herein, n is a positive integer. Optionally, each data packet may further carry a QoS flow identifier sequence number (QoS flow indicator sequence number, QFI SN), and the QFI SN is independently set for the data packet of each QoS flow. As shown in FIG. 3a, for a data packet of the QoS flow A, a QFI SN starts to increase sequentially from an initial value (for example, the initial value is 0 in FIG. 3a). Similarly, for the data packet of the flow B and the data packet of the flow C, QFI SNs also start to increase sequentially from the initial value. In addition, QFI SNs of the three QoS flows are set independently of each other.

It may be understood that after the access network device receives the data packet by using the GTP-U tunnel or the N3 interface, the access network device maps the MBS session or the QoS flow to a radio bearer, to transmit the data packet to the LTE through the corresponding radio bearer. Each radio bearer corresponds to one PDCP (namely, a PDCP entity). Therefore, in FIG. 3a, when the access network device indicates the QoS flow to be mapped to the radio bearer, the PDCP is used to replace the radio bearer. For example, a data packet mapped to a PDCP A is transmitted to the UE through a corresponding radio bearer A, and a data packet mapped to a PDCP B is transmitted to the UE through a corresponding radio bearer B.

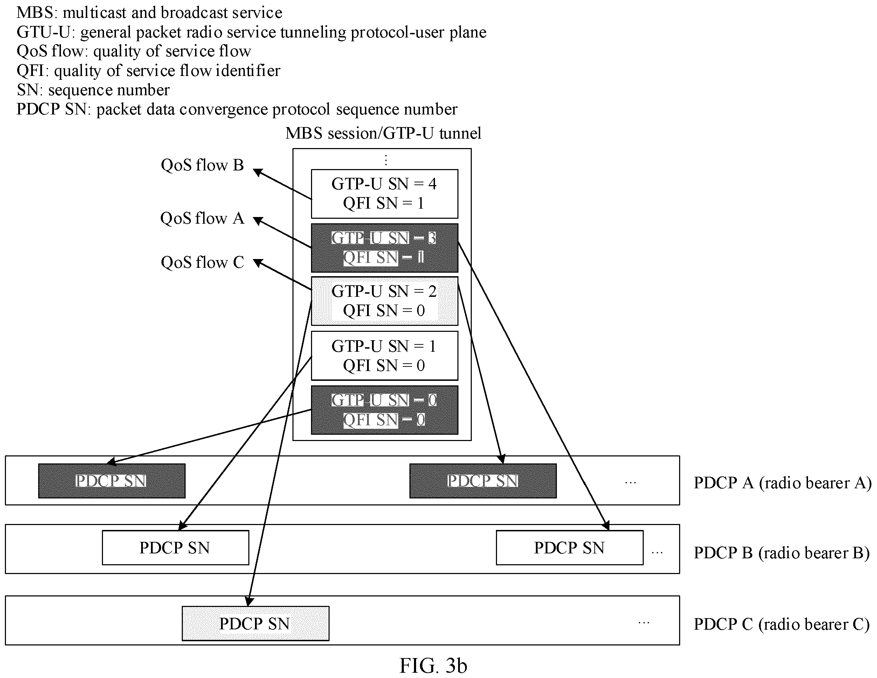

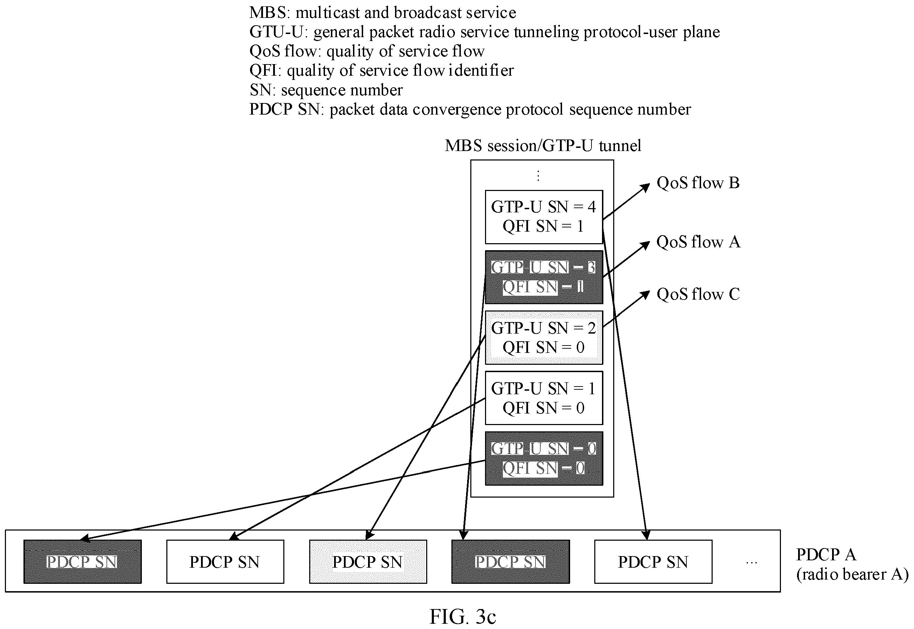

As shown in FIG. 3a, assuming that the access network device maps the QoS flow A and the QoS flow C to the PDCP A (namely, the radio bearer A), and maps the QoS flow B to the PDCP B (namely, the radio bearer B), data packets of the QoS flow A and the QoS flow C are transmitted through the radio bearer A, and the data packet of the QoS flow B is transmitted through the radio bearer B. Optionally, FIG. 3b is a schematic diagram of other MBS data packet transmission. As shown in FIG. 3b, assuming that the access network device maps a QoS flow A to a PDCP A (namely, a radio bearer A), maps a QoS flow B to a PDCP B (namely, a radio bearer B), and maps a QoS flow C to a PDCP C (namely, a radio bearer C), a data packet of the QoS flow A is transmitted through a radio bearer A, a data packet of the QoS flow B is transmitted through the radio bearer B, and a data packet of the QoS flow C is transmitted through the radio bearer C. Optionally, FIG. 3c is a schematic diagram of other MBS data packet transmission. As shown in FIG. 3c, assuming that the access network device maps a QoS flow A, a QoS flow B, and a QoS flow C to a PDCP A (namely, a radio bearer A), data packets of the QoS flow A, the QoS flow B, and the QoS flow C are all transmitted through the radio bearer A. In the PDCP entity of each radio bearer, a PDCP SN needs to be added to a PDCP header of each data packet, to be used for subsequently processing the data packet.

To make embodiments of this application clearer, the following provides explanations of related technical features in embodiments of this application. It should be noted that these explanations are intended to make embodiments of this application easier to understand, but should not be considered as a limitation on the protection scope claimed by this application.

### 1. PDCP count COUNT

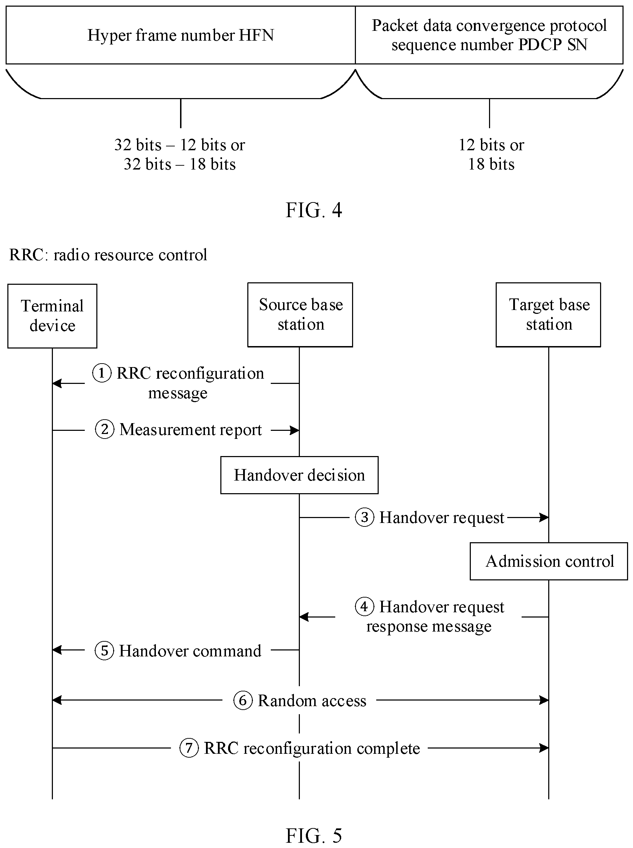

Currently, it is specified in a communication protocol that a length of the PDCP COUNT is 32 bits, and the PDCP COUNT includes two parts: a hyper frame number (hyper frame number, HFN) and a PDCP sequence number (PDCP sequence number, PDCP SN). For brevity of description, the PDCP COUNT may be referred to as a COUNT. It may be understood that, with continuous evolution and development of communication technologies, the length of the COUNT may alternatively be another value. This is not limited herein. In the following embodiments of this application, an example in which the length of the COUNT is 32 bits is used for description. FIG. 4 is a schematic diagram of a structure of the COUNT. As shown in FIG. 4, the COUNT includes an HFN and a PDCP SN. It is specified in the communication protocol that a length of the PDCP SN may be 12 bits or 18 bits. Optionally, with evolution of the communication protocol, the length of the PDCP SN may alternatively be another value. This is not limited herein. For ease of understanding, in the following embodiments of this application, an example in which the length of the PDCP SN is 12 bits or 18 bits is used for description. A length of the HFN is a difference obtained by subtracting the length of the PDCP SN from the length of the COUNT, in other words, the length of the HFN = the length of the COUNT - the length of the PDCP SN. In this embodiment of this application, the length of the HFN = 32 bits - the length of the PDCP SN (12 bits or 18 bits). A value of the COUNT is used to participate in an integrity protection and verification process and an encryption and decryption process. For example, the value of the COUNT may be used as an input parameter for performing a security operation. It may be understood that, to reduce transmission overheads, it is specified in the communication protocol that the value of the COUNT is not transmitted on an air interface, and only a PDCP SN part in the COUNT is carried in a packet header of a data packet for transmission. Specifically, the data packet of the multicast and broadcast service received by the access network device from the core network device may first arrive at an SDAP layer of the access network device. After being mapped at the SDAP layer, the data packet is transmitted to a corresponding PDCP entity. After being processed at a PDCP layer of the access network device, the data packet is transmitted to an RLC layer and a MAC layer. After being processed correspondingly, the data packet is sent from a physical layer, and is transmitted to the LTE side through an air interface. Then, each protocol layer on the LTE side sequentially performs corresponding processing on the data packet based on processing order opposite to processing order of the access network device. When the data packet is processed at the PDCP layer of the access network device, the PDCP entity of the PDCP layer may allocate one PDCP SN to each data packet, to identify a sequence number of the data packet. Generally, PDCP entities of different access network devices independently allocate PDCP SNs in data packets received from the core network, and each PDCP entity independently maintains the value of the HFN. Generally, when lengths of the COUNT, the HFN, and the PDCP SN that correspond to the data packet are limited, the COUNT, the HFN, and the PDCP SN each have a maximum value. When the maximum value is reached, "loopback" occurs. In other words, the count is restarted from zero. For example, it is assumed that the length of the PDCP SN is 12 bits, and the length of the HFN is 20 bits. When the value of the PDCP SN reaches 2¹²-1, if the value of the PDCP SN increases again, the value of the PDCP SN may change to 0, and the value of the HFN increases by 1. The HFN has a similar mechanism. After the loopback occurs, the value of the HFN changes to 0. When the loopback occurs on the HFN, the loopback also occurs on the COUNT.

### 2. Handover (Handover) technology

In a mobile communication system, mobility management of UE in a connected mode is controlled by a network device. To be specific, the network device sends a handover message to indicate a cell to which the UE is handed over and how to perform handover. For ease of understanding, FIG. 5 is a schematic diagram of a handover procedure. As shown in FIG. 5, after receiving the handover message, the UE accesses a target cell based on content included in the handover message. Therefore, successful sending of the handover message is a necessary condition for ensuring successful handover in a conventional handover mechanism. Specifically, the handover procedure includes the following steps. Step ①: A source base station sends an RRC reconfiguration message to the UE in the connected mode. The RRC reconfiguration message includes parameters such as a measurement object, report configuration, and a measurement identifier. Step ②: After measuring a series of cells based on the received RRC reconfiguration message, the UE obtains a measurement report and reports the measurement report to the currently connected source base station. Step (3): After receiving the measurement report reported by the LTE, the source base station determines whether the LTE needs to be handed over (in other words, the source base station makes a handover decision). If the source base station determines that the UE needs to be handed over, the source base station sends a handover request to a target base station. Step ④: After receiving a handover request message sent by the source base station, the target base station determines, based on a quantity of connections of the target base station (in other words, the target base station performs admission control), whether to allow the UE to access the target base station, and if the UE is allowed to access the target base station, the target base station sends a handover request response message (in other words, a handover acknowledgment message) to the source base station. The handover request response message includes parameters such as a cell radio network temporary identifier (cell radio network temporary identifier, C-RNTI) of a new cell and a security related algorithm of the target base station. Step (5): After receiving the handover request response message sent by the target base station, the source base station may send a handover command to the UE. The handover command may include the parameters in the handover request response message in step ④. In other words, the source base station layer is transparent. Specifically, in a 5G system, the handover command includes related information of the target cell and a related configuration parameter required for the UE to access the target cell. For example, the handover command includes information about the target cell (for example, a physical cell identifier (physical cell identifier, PCI) of the target cell, and frequency information (for example, a frequency corresponding to the target cell; and specifically, in the 5G system, for content included in the frequency information, refer to specific descriptions of FrequencyInfoDL IE in the protocol TS38331)) corresponding to the target cell, the C-RNTI allocated by the target cell to the LTE, random access channel (random access channel, RACH) resource information (for example, a dedicated RACH resource and/or a common RACH resource) required for accessing the target cell, and the like. Step ⑥: The LTE initiates random access to the target base station based on the handover command. In an existing handover procedure, the UE disconnects from the source base station, and before the LTE successfully accesses the target base station, a temporary interruption occurs when the UE receives and sends data. Step ⑦: The UE sends an RRC reconfiguration complete message to the target base station.

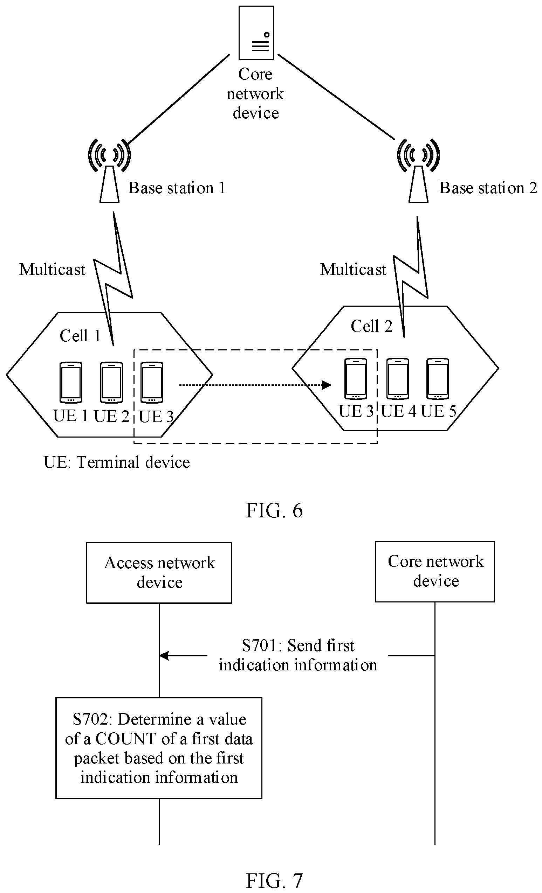

It may be understood that, because the LTE that receives the multicast and broadcast service moves, the LTE often needs to be handed over from one base station to another base station to continue to receive the multicast and broadcast service. For example, FIG. 6 is a schematic diagram of a scenario in which the UE that receives the multicast and broadcast service is handed over. As shown in FIG. 6, the core network device may send a data packet of the multicast and broadcast service to different base stations (a base station 1 and a base station 2 shown in FIG. 6), and then each base station may respectively send the data packet to at least one UE included in a cell corresponding to the base station. For example, as shown in FIG. 6, the base station 1 may send the data packet to UE 1, UE 2, and UE 3 in a cell 1 in a PTM transmission manner, and the base station 2 may also send the data packet to LTE 4 and LTE 5 in a cell 2 in the PTM transmission manner. When the UE 3 moves, for example, when a location of the UE 3 moves from the cell 1 to the cell 2, the UE 3 needs to be handed over from the base station 1 to the base station 2 to continue to receive the data packet of the multicast and broadcast service. It may be understood that the base station 1 is the source base station, and the base station 2 is the target base station. Because transmission progress of multicast and broadcast services of different base stations may be different, PDCP entities of the source base station and the target base station separately allocate PDCP SNs in data packets of the multicast and broadcast service (in other words, for a same data packet, a PDCP SN allocated by a PDCP entity of the source base station to the data packet may also be different from a PDCP SN allocated by a PDCP entity of the target base station to the data packet). Consequently, the source base station and the target base station cannot effectively forward data based on the transmission progress of the different base stations, and then a case in which the data packets of the MBS may be lost in the handover procedure of the UE cannot be avoided. Based on this, embodiments of this application provide a communication method. The method can implement normal transmission of the multicast and broadcast service in a handover scenario, and improve communication reliability and stability.

The following describes in detail the technical solutions provided in this application with reference to more accompanying drawings.

### Embodiment 1

FIG. 7 is a schematic flowchart of a communication method according to an embodiment of this application. As shown in FIG. 7, the method includes the following steps S701 and S702.

S701: An access network device receives first indication information from a core network device.

In some feasible implementations, the access network device may receive the first indication information from the core network device, where the first indication information indicates a value of a COUNT of a first data packet. The COUNT includes an HFN and a PDCP SN. In other words, the value of the COUNT of the first data packet includes a value of the HFN in the first data packet and a value of the PDCP SN in the first data packet. The first data packet may be a data packet of a multicast and broadcast service. It may be understood that the first indication information may be carried in the first data packet sent by the core network device to the access network device, to be sent to the access network device. In other words, that the access network device receives the first indication information from the core network device may be understood as that the access network device receives the first data packet from the core network device, where the first data packet includes the first indication information. For example, the first indication information may be carried in a packet header of the first data packet. Optionally, the first indication information may alternatively be carried in signaling. In other words, the core network device may send the signaling to the access network device before sending the first data packet to the access network device or after sending the first data packet to the access network device. The signaling includes the first indication information, and the first indication information indicates the value of the COUNT of the first data packet.

It may be understood that, in this embodiment of this application, when one MBS session includes a plurality of QoS flows (for example, a QoS flow A, a QoS flow B, and a QoS flow C), the plurality of QoS flows may be all mapped to one radio bearer (as shown in FIG. 3c, the QoS flow A, the QoS flow B, and the QoS flow C are all mapped to a radio bearer A). In this mapping manner, a value of the first indication information may not distinguish a specific QoS flow to which the data packet belongs, and increase sequentially from an initial value based on a sequence of data packets. For example, as shown in FIG. 3c, the MBS session includes the QoS flow A, the QoS flow B, and the QoS flow C. Data packets of the QoS flow A, the QoS flow B, and the QoS flow C are all mapped to the radio bearer A for transmission. As shown in FIG. 3c, five data packets included in the MBS session are sequentially transmitted from bottom to top. Therefore, values of the first indication information in the five data packets may be sequentially set to 0, 1, 2, 3, and 4 from bottom to top.

Optionally, alternatively, each of the plurality of QoS flows may be mapped to one radio bearer (as shown in FIG. 3b, the QoS flow A is mapped to a PDCP A, the QoS flow B is mapped to a PDCP B, and the QoS flow C is mapped to a PDCP C), and then the data packet of each QoS flow is transmitted to UE through each radio bearer. In this mapping manner, the value of the first indication information is independently set for the data packet of each QoS flow. For example, for the data packet of the QoS flow A, the value of the first indication information increases sequentially from an initial value. Similarly, for the data packet of the flow B and the data packet of the flow C, the value of the first indication information also increases sequentially from the initial value. In addition, the first indication information of the three QoS flows is set independent of each other. In this way, regardless of the foregoing mapping manners, the values of the COUNTs of the PDCP entities in the radio bearer are consecutive. For example, as shown in FIG. 3b, the MBS session includes the QoS flow A, the QoS flow B, and the QoS flow C. The data packet of the QoS flow A is mapped to the PDCP A for transmission, the data packet of the QoS flow B is mapped to the PDCP B for transmission, and the data packet of the QoS flow C is mapped to the PDCP C for transmission. As shown in FIG. 3c, five data packets included in the MBS session are sequentially transmitted from bottom to top. Values of the first indication information in the data packet of the QoS flow A in the MBS session may be sequentially set to 0 and 1 from bottom to top, values of the first indication information in the data packet of the QoS flow B in the MBS session may be sequentially set to 0 and 1 from bottom to top, and a value of the first indication information in the data packet of the QoS flow C in the MBS session may be set to 0.

In some feasible implementations, the first indication information may be carried in a first field in a GTP-U packet header, and a length of the first field is 32 bits. In other words, in this embodiment of this application, a new 32-bit field may be designed in the GTP-U packet header, to carry the first indication information. For example, 18 bits in the first field may indicate the value of the PDCP SN, and 14 bits in the first field other than the 18 bits may indicate the value of the HFN. For another example, 12 bits in the first field may indicate the value of the PDCP SN, and 20 bits in the first field other than the 12 bits may indicate the value of the HFN. This is specifically determined based on an actual application scenario, and is not limited herein.

Optionally, in some feasible implementations, the first indication information may alternatively be carried in a second field and a third field in a GTP-U packet header. The second field is a GTP-U SN field, or the second field is a QFI SN field. A sum of lengths of the second field and the third field is 32 bits. In other words, in this embodiment of this application, the GTP-U SN field or the QFI SN field may be reused, and a new field is designed in the GTP-U packet header other than the GTP-U SN field or the QFI SN field, to jointly carry the first indication information. It may be understood that, it is specified in a communication protocol that a length of the GTP-U SN field is 16 bits, and a length of the QFI SN field is 24 bits. Therefore, if the second field is the GTP-U SN field, a length of a newly designed third field may be 16 bits; or if the second field is the QFI SN field, a length of a newly designed third field may be eight bits. A location of the second field may be designed before a location of the third field, or a location of the second field may be designed after a location of the third field. The location of the second field is specifically determined based on an actual application scenario, and is not limited herein. Herein, that a location of the second field is designed before a location of the third field may be understood as follows: The second field is N most significant bits in the 32 bits, and the third field is M least significant bits (for ease of description, M least significant bits for short) in the 32 bits. Herein, that a location of the second field is designed after a location of the third field may be understood as follows: The second field is N least significant bits (for ease of description, N least significant bits for short) in the 32 bits, and the third field is M most significant bits (for ease of description, M most significant bits for short) in the 32 bits, where N + M = 32. To be specific, when the second field is the GTP-U SN field (namely, N = 16), a length of the third field is 16 bits (namely, M = 16); or when the second field is the QFI SN field (namely, N = 24), a length of the third field is eight bits (namely, M = 8). For ease of understanding, in the following embodiments of this application, an example in which the location of the second field is designed after the location of the third field, that is, the second field is N least significant bits in the 32 bits, and the third field is M most significant bits in the 32 bits is used for description. In addition, it is assumed that a length of the COUNT is 32 bits. If the value of the COUNT is another length, corresponding adjustment needs to be performed during specific value calculation.

In some feasible implementations, if the second field is the GTP-U SN field (16 bits), and the location of the second field is designed after the location of the third field, the GTP-U SN field is 16 least significant bits in the 32 bits, and the third field is 16 most significant bits in the 32 bits. ① If a length of the PDCP SN is 18 bits, and a length of the HFN is 14 bits, two bits included in the third field and the 16 bits included in the GTP-U SN field may jointly indicate the value of the PDCP SN (in other words, the length of the PDCP SN is 18 bits), and 14 bits in the third field other than the two bits may indicate the value of the HFN (in other words, the length of the HFN is 14 bits). For example, last two bits (namely, two least significant bits in the third field) in the third field and the 16 bits included in the GTP-U SN field may jointly indicate the value of the PDCP SN, and the other 14 bits (namely, 14 most significant bits in the third field) in the third field other than the last two bits may indicate the value of the HFN. ② If a length of the PDCP SN is 12 bits, and a length of the HFN is 20 bits, four bits included in the GTP-U SN field and the 16 bits included in the third field may be used together as 20 bits that indicate the value of the HFN, and the other 12 bits in the GTP-U SN other than the four bits are used as 14 bits that indicate the value of the PDCP SN. For example, four most significant bits in the GTP-U SN field and the 16 bits included in the third field may jointly indicate the value of the HFN, and the other 12 bits (namely, 12 least significant bits in the GTP-U SN field) in the GTP-U SN field other than the four most significant bits may indicate the value of the PDCP SN.

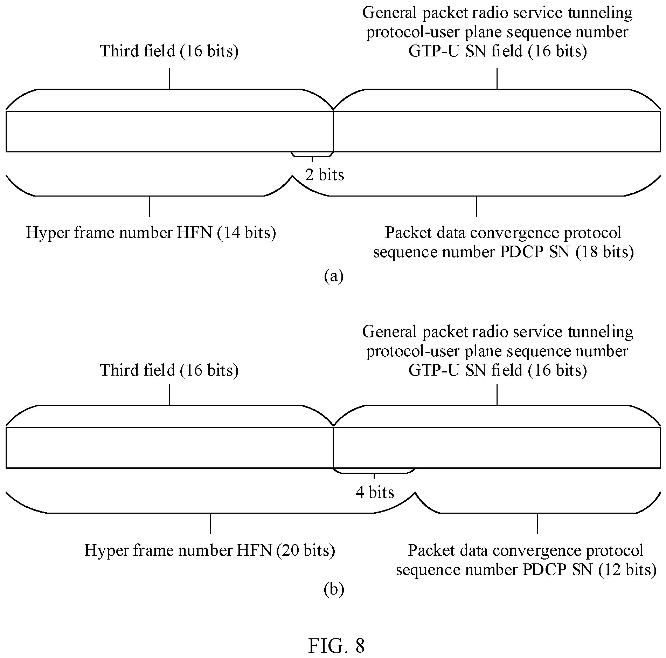

For ease of understanding, FIG. 8 is a schematic diagram of a structure of the second field and the third field according to this embodiment of this application. As shown in FIG. 8, the second field is a GTP-U SN field, and a location of the second field is designed after a location of the third field. As shown in (a) in FIG. 8, when a length of the PDCP SN is 18 bits, 14 most significant bits in the third field may indicate the value of the HFN, and two least significant bits in the third field and 16 bits included in the GTP-U SN field may indicate the value of the PDCP SN. As shown in (b) in FIG. 8, when a length of the PDCP SN is 12 bits, 16 bits included in the third field and four most significant bits in the GTP-U SN field may indicate the value of the HFN, and 12 least significant bits in the GTP-U SN field may indicate the value of the PDCP SN.

Optionally, in some feasible implementations, if the second field is a QFI SN field (24 bits), and the location of the second field is designed after the location of the third field, the QFI SN field is 24 least significant bits in the 32 bits, and the third field is eight most significant bits in the 32 bits. ① If a length of the PDCP SN is 18 bits, and a length of the HFN is 14 bits, six bits included in the QFI SN field and the eight bits included in the third field may jointly indicate the value of the HFN (in other words, the length of the HFN is 14 bits). For example, six most significant bits in the QFI SN field and the eight bits included in the third field may jointly indicate the value of the HFN, and 18 least significant bits in the QFI SN field may indicate the value of the PDCP SN. ② If a length of the PDCP SN is 12 bits, and a length of the HFN is 20 bits, 12 bits included in the QFI SN field and the eight bits included in the third field may jointly indicate the value of the HFN (in other words, the length of the HFN is 20 bits). For example, 12 most significant bits in the QFI SN field and the eight bits included in the third field may jointly indicate the value of the HFN, and 12 least significant bits in the QFI SN field may indicate the value of the PDCP SN.

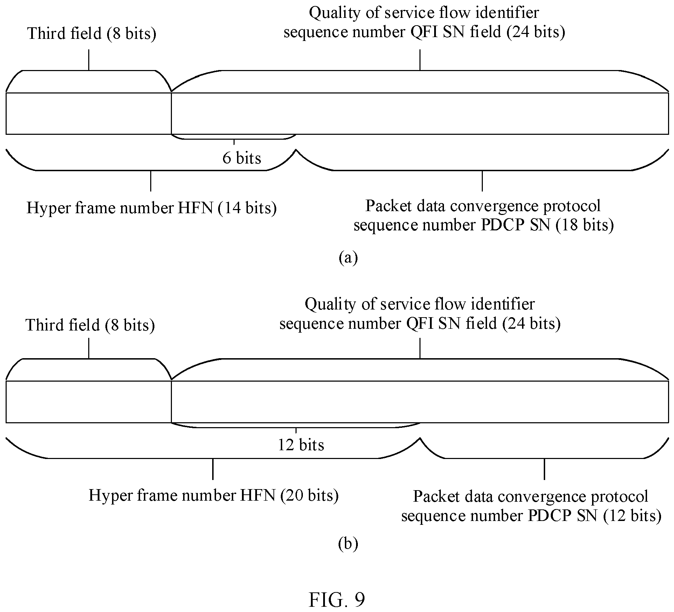

For ease of understanding, FIG. 9 is a schematic diagram of another structure of the second field and the third field according to this embodiment of this application. As shown in FIG. 9, the second field is a QFI SN field, and a location of the second field is designed after a location of the third field. As shown in (a) in FIG. 9, when a length of the PDCP SN is 18 bits, eight bits included in the third field and six most significant bits in the QFI SN field may indicate the value of the HFN, and 18 least significant bits in the QFI SN field may indicate the value of the PDCP SN. As shown in (b) in FIG. 9, when a length of the PDCP SN is 12 bits, eight bits included in the third field and 12 most significant bits in the QFI SN field may indicate the value of the HFN, and 12 least significant bits in the QFI SN field may indicate the value of the PDCP SN.

S702: The access network device determines the value of the COUNT of the first data packet based on the first indication information.

In some feasible implementations, after receiving the first indication information from the core network device, the access network device may determine the value of the COUNT of the first data packet based on the first indication information. Specifically, the access network device may determine, as the value of the COUNT of the first data packet, a value of a COUNT indicated by the first indication information. For example, assuming that the value of the COUNT indicated by the first indication information is 54, after receiving the first data packet from the core network device, the access network device may parse the first indication information included in the first data packet, to determine, as the value of the COUNT corresponding to the first data packet, 54 indicated by the first indication information. For another example, assuming that the value of the COUNT indicated by the first indication information is 254, after receiving the first data packet from the core network device, the access network device may parse the first indication information included in the first data packet, to determine, as the value of the COUNT corresponding to the first data packet, 254 indicated by the first indication information.

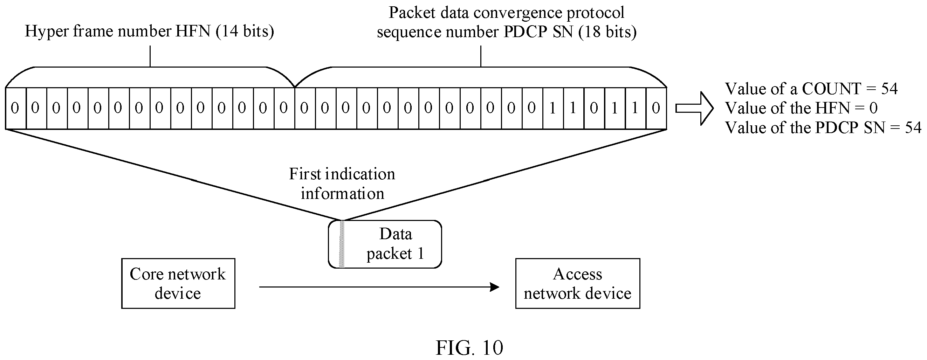

Optionally, in some feasible implementations, after determining the value of the COUNT of the first data packet based on the first indication information, the access network device may further determine, based on the value of the COUNT of the first data packet, the value of the PDCP SN and the value of the HFN that correspond to the first data packet. Further, in the PDCP entity of the access network device, the value of the PDCP SN is added to the packet header of the first data packet to form a PDCP PDU. Then, after being sequentially processed by an RLC layer, a MAC layer, and a PHY layer of the access network device, the first data packet is transmitted to a terminal device through an air interface and processed accordingly at each protocol layer. In addition, the access network device may further update, based on the determined value of the HFN in the first data packet, a value of an HFN that corresponds to the PDCP entity and that is maintained by the access network device. For example, FIG. 10 is a schematic diagram of an application scenario of determining the value of the COUNT of the first data packet according to this embodiment of this application. As shown in FIG. 10, the core network device sends a data packet 1 of the multicast and broadcast service to the access network device, where the data packet 1 includes first indication information. It is assumed that a length of a PDCP SN is 18 bits, a length of an HFN is 14 bits, and a value of a COUNT indicated by the first indication information is 54 (as shown in FIG. 10, a binary stream corresponding to 54 is 00000000000000000000000000110110). In this case, the access network device may determine, as the value of the COUNT corresponding to the data packet 1, 54 indicated by the first indication information. Because the length of the PDCP SN is 18 bits, it may be determined, based on the value of the COUNT, that the value of the PDCP SN corresponding to the data packet 1 is 54 (in other words, 54 modulo 2¹⁸ = 54), and that the value of the HFN is 0.

In this embodiment of this application, the access network device receives the first indication information from the core network device, and may determine the value of the COUNT of the first data packet based on the value of the COUNT indicated by the first indication information, to determine, based on the determined value of the COUNT of the first data packet, the value of the PDCP SN and the value of the HFN that correspond to the first data packet. According to the method in this embodiment of this application, when the core network device sends a same data packet to different access network devices, based on first indication information corresponding to the same data packet, values of PDCP SNs set by the different access network devices are the same and values of HFNs maintained by the different access network devices are the same, to implement synchronization of the values of the PDCP SNs and synchronization of the values of the HFNs between the different access network devices. Correspondingly, in a handover scenario, for example, when the UE is handed over from a base station 1 to a base station 2, the base station 1 needs to send SN Status Transfer to the base station 2, to notify the base station 2 of a service transmission status of the UE on the base station 1. After receiving the SN Status Transfer, the base station 2 may determine, based on a value of an HFN in the SN Status Transfer, a value of a COUNT corresponding to a next to-be-transmitted data packet. Therefore, this helps implement normal transmission of the multicast and broadcast service in the handover scenario, and improve communication reliability and stability.

### Embodiment 2

It may be understood that PDCP entities of a source base station and a target base station usually independently allocate PDCP SNs in data packets of a multicast and broadcast service. In other words, even for a same data packet, a value of a PDCP SN allocated by a PDCP entity of the source base station to the data packet may be different from a value of a PDCP SN allocated by a PDCP entity of the target base station to the data packet. Based on this, this application provides a communication method. According to the method, it can be ensured that different access network devices allocate a same value of a PDCP SN to a same data packet, to help implement normal transmission of the multicast and broadcast service, and improve communication reliability and stability.

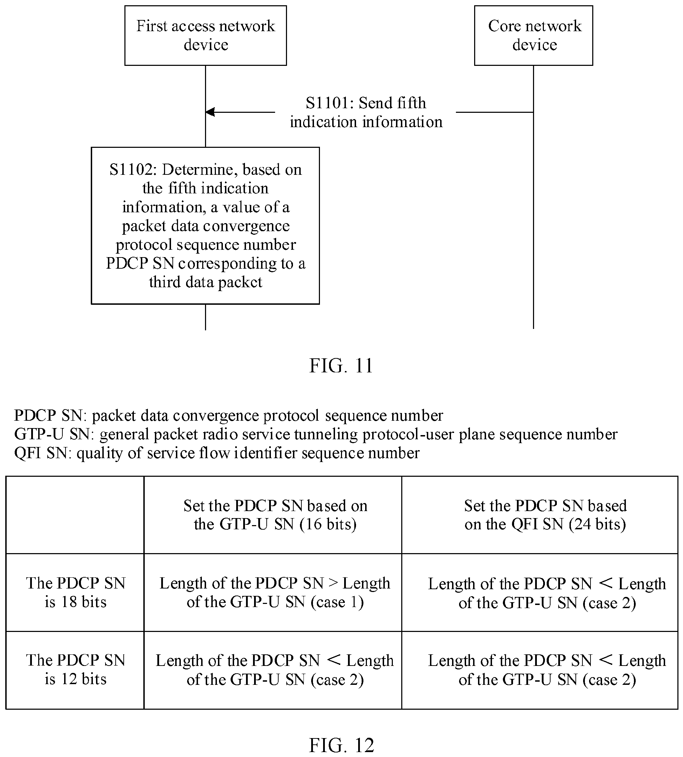

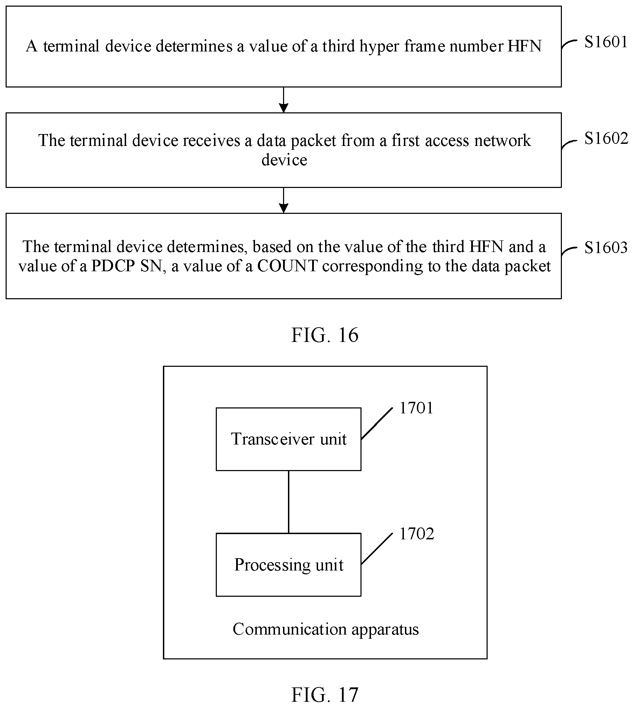

FIG. 11 is another schematic flowchart of the communication method according to this embodiment of this application. As shown in FIG. 16, the method includes the following steps S1101 to S1103.

S1101: An access network device receives fifth indication information from a core network device.

In some feasible implementations, the access network device receives the fifth indication information from the core network device. The fifth indication information indicates a sequence of a third data packet in at least one data packet. It may be understood that the fifth indication information may be carried in the third data packet, or the fifth indication information may be carried in signaling. Therefore, that the access network device receives the fifth indication information from the core network device may be understood as that the access network device receives the third data packet from the core network device, where the third data packet includes the fifth indication information. Alternatively, that the access network device receives the fifth indication information from the core network device may be understood as that the access network device receives the signaling from the core network device, where the signaling includes the fifth indication information. Generally, the core network device may send the signaling to the access network device before sending the third data packet to the access network device or after sending the third data packet to the access network device. The signaling includes the fifth indication information. For ease of understanding, in the following embodiments of this application, an example in which the fifth indication information is carried in the third data packet is used for description.

The fifth indication information may be a value of a GTP-U SN, or the fifth indication information may be a value of a QFI SN, or the like. This is not limited herein. As shown in FIG. 3a, the GTP-U SN does not distinguish between QoS flows, and the QFI SN is independently set for a data packet of each QoS flow. To be specific, a GTP-U SN carried in a data packet of one QoS flow indicates a sequence of the data packet in a plurality of data packets corresponding to a plurality of QoS flows included in one transport channel, and a QFI SN carried in a data packet of one QoS flow indicates a sequence of the data packet in a plurality of data packets corresponding to the QoS flow. Currently, it is specified in a communication protocol that a length of the GTP-U SN is 16 bits, and a length of the QFI SN is 24 bits. Optionally, with evolution of the communication protocol, the length of the GTP-U SN and the length of the QFI SN may alternatively be other values. This is not limited herein. For ease of understanding, in this embodiment of this application, an example in which the length of the GTP-U SN is 16 bits and the length of the QFI SN is 24 bits is used for description.

S 1102: The access network device determines, based on the fifth indication information, a value of a packet data convergence protocol sequence number PDCP SN corresponding to the third data packet.

In some feasible implementations, the access network device may determine, based on the fifth indication information, the value of the PDCP SN corresponding to the third data packet. Further, the determined value of the PDCP SN is added to a packet header of the third data packet, and a third data packet whose packet header is updated is sent to a terminal device. The access network device may determine, based on the fifth indication information and a first value, the value of the PDCP SN corresponding to the third data packet, or determine, as a value indicated by the fifth indication information, the value of the PDCP SN corresponding to the third data packet (in other words, the value of the PDCP SN corresponding to the third data packet is equal to the value indicated by the fifth indication information). That the value of the PDCP SN corresponding to the third data packet is determined based on the fifth indication information and the first value may be understood as that a remainder obtained by dividing the value indicated by the fifth indication information by the first value is determined as the value of the PDCP SN corresponding to the third data packet. In other words, the value of the PDCP SN corresponding to the third data packet is a remainder obtained by dividing the value indicated by the fifth indication information by the first value. The first value meets: A = 2^{H}. Herein, A represents the first value, and H represents a length of the PDCP SN. For example, H may be 12, or H may be 18, or the like. This is specifically determined based on an actual application scenario, and is not limited herein.

For example, FIG. 12 is a schematic diagram of setting the PDCP SN based on the fifth indication information according to this embodiment of this application. As shown in FIG. 12, when the fifth indication information is the value of the GTP-U SN (where the length of the GTP-U SN is 16 bits), if the length of the PDCP SN is 18 bits (in other words, the length of the PDCP SN > the length of the GTP-U SN), the value of the PDCP SN corresponding to the third data packet is equal to the value of the GTP-U SN. If the length of the PDCP SN is 12 bits (in other words, the length of the PDCP SN < the length of the GTP-U SN), the value of the PDCP SN corresponding to the third data packet is equal to a remainder obtained by dividing the value of the GTP-U SN by the first value, where the first value is 2¹⁸. As shown in FIG. 12, when the fifth indication information is the value of the QFI SN (where the length of the QFI SN is 24 bits), regardless of whether the length of the PDCP SN is 18 bits or 12 bits, the length of the PDCP SN is less than the length of the QFI SN. In this case, if the value of the PDCP SN in the third data packet is set based on the value of the QFI SN, the value of the PDCP SN in the third data packet is equal to a remainder obtained by dividing the value of the QFI SN by the first value. When the value of the PDCP SN is 18 bits, the first value is 2¹⁸; or when the value of the PDCP SN is 12 bits, the first value is 2¹².

In this embodiment of this application, to more clearly describe how to specifically set the value of the PDCP SN based on the value of the GTP-U SN or the value of the QFI SN, the following provides descriptions by using specific values as examples. For example, assuming that the fifth indication information is the value of the GTP-U SN (for example, the value of the GTP-U SN indicated by the fifth indication information is 60000), and the length of the PDCP SN is 18 bits, the value of the PDCP SN is 60000 (in other words, the value of the PDCP SN is equal to the value of the GTP-U SN). For another example, assuming that the fifth indication information is the value of the GTP-U SN (for example, the value of the GTP-U SN indicated by the fifth indication information is 60000), and the length of the PDCP SN is 12 bits, the value of the PDCP SN is 1130 (60000 modulo 2¹² = 2656).

For another example, assuming that the fifth indication information is the value of the QFI SN (for example, the value of the QFI SN indicated by the fifth indication information is 300000), and the length of the PDCP SN is 18 bits, the value of the PDCP SN is 37856 (that is, 300000 modulo 2¹⁸ = 37856). For another example, assuming that the fifth indication information is the value of the QFI SN (for example, the value of the QFI SN indicated by the fifth indication information is 300000), and the length of the PDCP SN is 12 bits, the value of the PDCP SN is 992 (300000 modulo 2¹² = 992).

It may be understood that, as shown in FIG. 12, there is only one case in which the length of the PDCP SN is greater than a length of the fifth indication information (that is, the fifth indication information is the GTP-U SN, and the length of the PDCP SN is 18 bits), and the case is referred to as a case 1. Other cases are cases in which the length of the PDCP SN is less than the length of the fifth indication information, and the cases are referred to as a case 2. For the case 2, the length of the fifth indication information is greater than the length of the PDCP SN, and the value of the PDCP SN may actually reach a maximum value (namely, 2¹⁸-1 or 2¹²-1) configured by a base station. Therefore, the base station and a UE may work according to an existing communication protocol. For the case 1, the length of the fifth indication information is greater than the length of the PDCP SN, and the value of the PDCP SN cannot actually reach a maximum value (namely, 2¹⁸-1) configured by the base station. Therefore, the existing communication protocol needs to be improved.

The following specifically describes impact on the existing communication protocol when the length of the PDCP SN is greater than the length of the fifth indication information (for example, the case 1). For ease of understanding, in this embodiment of this application, the case 1 is mainly used as an example for description.

It may be understood that the case 1 occurs when the PDCP SN is set based on the GTP-U SN, and in this case, the length of the PDCP SN needs to be configured as 18 bits. Because it is specified in the protocol that the length of the GTP-U SN is 16 bits, in the case 1, the configured length (namely, 18 bits) of the PDCP SN is greater than the length (namely, 16 bits) of the GTP-U SN. In addition, due to a limitation that "the value of the PDCP SN is set based on the value of the GTP-U SN", an actual maximum value that can be reached by the PDCP SN is 2¹⁶-1. In other words, a maximum length of the PDCP SN is 16 bits. In other words, in the case 1, an effective length of the PDCP SN is 16 bits. Optionally, the effective length of the PDCP SN may alternatively be another value, is specifically determined based on an actual scenario, and is not limited herein.

It may be understood that, for the multicast and broadcast service, a length of an HFN of the access network device is a difference between a preset length and the effective length of the PDCP SN. The preset length is a length of a COUNT. For example, in the existing communication protocol, the length of the COUNT is 32 bits. Therefore, in the case 1, for the multicast and broadcast service, the length of the HFN of the access network device is 16 bits (where the length of the COUNT (namely, 32 bits) - the effective length of the PDCP SN (16 bits) = 16 bits), instead of 14 bits (where the length of the COUNT (namely, 32 bits) - the configured length of the PDCP SN (namely, 18 bits)).

Optionally, in some feasible implementations, a value range of the PDCP SN in the data packet of the multicast and broadcast service is [0, 2^{L}-1], where L is the effective length of the PDCP SN. In other words, the value range of the PDCP SN allocated by the access network device to the data packet is [0, 2^{L}-1]. For example, in the case 1, the value of the PDCP SN in the data packet ranges from 0 to 2¹⁶-1 (namely, [0, 2¹⁶-1]), instead of being specified in the existing communication protocol. When the configured length of the PDCP SN is 18, the value of the PDCP SN in the data packet of the multicast and broadcast service ranges from 0 to 2¹⁸-1 (namely, [0, 2¹⁸-1]).

Optionally, in some feasible implementations, when the access network device determines that a fourth data packet is a next to-be-sent data packet, the access network device may determine, based on the effective length of the PDCP SN and a value of a COUNT of the next to-be-sent data packet, a value of a PDCP SN corresponding to the fourth data packet. Specifically, the value of the PDCP SN corresponding to the fourth data packet meets: Y = X mod 2^{L}. Herein, Y is the value of the PDCP SN corresponding to the fourth data packet, X is the value of the COUNT of the next to-be-sent data packet, and L is the effective length of the PDCP SN. For example, in the case 1, the value of the PDCP SN corresponding to the fourth data packet is a remainder obtained by dividing the value of the COUNT of the next to-be-sent data packet by 2¹⁶.

Optionally, in some feasible implementations, the value of the PDCP SN corresponding to the third data packet is carried in a PDCP SN field of the packet header of the third data packet, where a bit in the PDCP SN field other than a bit used to carry the value of the PDCP SN corresponding to the third data packet is set to 0, set to 1, or used as a reserved bit. In other words, an existing PDCP PDU format may be reused for a PDCP PDU format of the data packet of the multicast and broadcast service in the case 1. In the existing PDCP PDU format, a length of the PDCP SN field is 18 bits or 12 bits. For example, the length of the PDCP SN configured by the access network device is 18 bits. For the data packet of the multicast and broadcast service in the case 1, the length of the HFN is 16 bits, and the effective length of the PDCP SN is 16 bits. In this case, for the 18-bit PDCP SN field in the existing PDCP PDU format, two bits in the PDCP SN field in the PDCP PDU format may be ignored (for example, the two bits are both set to 0, set to 1, or used as reserved bits). For example, two most significant bits in the 18 bits may be ignored, and only 16 least significant bits are used to carry the value of the PDCP SN. In this case, when the value of the PDCP SN reaches 2¹⁶-1, a value of a next PDCP SN starts from 0, and a value of a corresponding HFN increases by 1. For another example, two least significant bits in the 18 bits may be ignored, and only 16 most significant bits are used to carry the value of the PDCP SN. Alternatively, one least significant bit and one most significant bit in the 18 bits may be ignored, and only 16 middle bits are used to carry the value of the PDCP SN. This is not limited herein. When receiving the data packet in which the length of the PDCP SN field is 18 bits, the terminal device reads only corresponding 16 bits in the PDCP SN field as the effective length of the PDCP SN.

Optionally, in some feasible implementations, the value of the PDCP SN corresponding to the third data packet may alternatively be carried in a fourth field in the packet header of the third data packet, and a length of the fourth field is equal to the effective length of the PDCP SN. In other words, a new PDCP PDU format may be designed for the PDCP PDU format of the data packet of the multicast and broadcast service in the case 1. Different from a case in which the length of the PDCP SN field is 18 bits or 12 bits in the PDCP PDU format of the data packet of the MBS specified in the existing protocol, a length of a PDCP SN field (namely, the fourth field) in the new PDCP PDU format is 16 bits. In other words, for the data packet (the data packet of the multicast and broadcast service in the case 1) in this type of multicast and broadcast service, the PDCP PDU format in which the length of the PDCP SN field is 16 bits needs to be used.

Optionally, in some feasible implementations, the access network device may further determine sixth indication information, and send the sixth indication information to the terminal device. The sixth indication information indicates a second value, and the second value is the effective length of the PDCP SN. For example, in the case 1, the second value is 16 bits. In this case, although the length of the PDCP SN configured by the access network device for the terminal device is 18 bits, because the length of the PDCP SN corresponding to the maximum value of the PDCP SN is the second value, namely, 16 bits, the effective length of the PDCP SN is 16 bits, and two of configured 18 bits do not indicate the value of the PDCP SN in actual transmission. For example, the two bits may be set to 0, set to 1, or used as reserved bits.

Correspondingly, the terminal device may receive the sixth indication information from the access network device, and determine a size of a reordering window, and/or the length of the hyper frame number HFN, and/or the value range of the PDCP SN in the data packet based on the second value indicated by the sixth indication information. The size of the reordering window meets: RW = 2^{L-1} . Herein, RW is the size of the reordering window, and L is the second value. The length of the HFN of the terminal device is a difference between a preset length and the second value, where the preset length is a length of a count COUNT. The value range of the PDCP SN in the data packet is [0, 2^{L}-1], where L is the second value.

It may be understood that, in the existing communication protocol, the size of the reordering window is 2^{[pdcp-SN-SizeDL]-1}. Herein, [pdcp-SN-SizeDL] indicates the length (for example, 18 bits or 12 bits) of the PDCP SN configured by the access network device. However, in the case 1, because the value of the PDCP SN is set based on the value of the GTP-U SN, a maximum length (namely, 16 bits) that can be actually reached by the PDCP SN is less than the length (namely, 18 bits) of the PDCP SN configured by the access network device. If the size of the reordering window is still set based on the length of the PDCP SN configured by the access network device, a problem is caused to transmission of the multicast and broadcast service. In this case, the size of the reordering window should be 2^{L-1}, where L is the maximum length (namely, the effective length of the PDCP SN) that can be actually reached by the PDCP SN. For example, in the case 1, L is 16 bits. It may be understood that, it is specified in a current protocol that the value of the PDCP SN ranges from 0 to [2^{[pdcp-SN-SizeDL]}-1]. However, in this application, for the data packet of the multicast and broadcast service in the case 1, the value of the PDCP SN in the data packet of this type of multicast and broadcast service should range from 0 to 2^{L}-1. In other words, the value range of the PDCP SN is [0, 2^{L}-1], where L is the second value. Correspondingly, in the terminal device, the length of the HFN in this type of multicast and broadcast service is a difference between a preset length and the second value. The preset length is the length of the COUNT. For example, in the case 1, the second value is 16 bits. Therefore, in the case 1, for the multicast and broadcast service, the length of the HFN of the terminal device is 16 bits instead of 14 bits.

Optionally, in some feasible implementations, for the terminal device, in a multicast and broadcast service transmission process, when the length of the PDCP SN is greater than the length of the fifth indication information, the terminal device may consider by default that the effective length of the PDCP SN may alternatively be a fixed value (for example, 16 bits). In other words, it may be further specified in the protocol that when the terminal device determines that a service type is the multicast and broadcast service, and the value of the PDCP SN included in the received data packet of the multicast and broadcast service is set based on the fifth indication information that is less than the length of the PDCP SN configured by the access network device, it may be considered by fault that the effective length of the PDCP SN may be a fixed value.

Optionally, in some feasible implementations, the terminal device may further receive a fifth data packet from the access network device, where the fifth data packet includes a value of a second PDCP SN. Therefore, the terminal device may determine, based on the second value and the value of the second PDCP SN, a value of a third PDCP SN corresponding to the fifth data packet. Specifically, the value of the third PDCP SN meets: M = N mod 2^{L}. Herein, M is the value of the third PDCP SN, N is the value of the second PDCP SN, and L is the second value. To be specific, when the effective length of the PDCP SN of the terminal device is inconsistent with the length of the PDCP SN in the received PDCP data packet, the terminal device needs to calculate an actual effective value of the PDCP SN based on the value of the PDCP SN included in the received data packet. Assuming that the effective length of the PDCP SN is L, the effective value of the PDCP SN corresponding to the data packet is M = N mod 2^{L}. Herein, M is the effective value (namely, the value of the third PDCP SN) of the PDCP SN corresponding to the data packet, N is the value (the value of the second PDCP SN) of the PDCP SN included in the data packet, and L is the effective length (namely, the second value) of the PDCP SN.

In this embodiment of this application, different access network devices set/allocate, based on the fifth indication information included in the data packet received from the core network device, the value of the PDCP SN corresponding to the data packet. This can ensure that the different access network devices allocate a same PDCP SN to a same data packet, to implement normal transmission of the multicast and broadcast service with an inter-station PDCP SN synchronization requirement, and improve communication reliability and stability.

### Embodiment 3

It may be understood that, in a scenario, it is assumed that a base station has started to transmit a multicast and broadcast service for some UEs, and another UE joins receiving of the multicast and broadcast service at a specific moment. Because a data packet carries only a PDCP SN but does not carry a corresponding HFN, the newly joined LTE starts to maintain a value of an HFN of the UE from an initial value. In this case, the base station has performed transmission for a period of time, and a value of an HFN of the base station is greater than the initial value. Consequently, the values of the HFNs between the UE and the base station may not be synchronized. Optionally, in another scenario, it is assumed that a base station (for example, a base station 1) has started to transmit a multicast and broadcast service for some UEs, but another base station (for example, a base station 2) just starts to transmit the multicast and broadcast service at a specific moment. In this case, because the base station 1 has performed transmission for a period of time, a value of an HFN maintained by the base station 1 may be greater than a value of an HFN maintained by the base station 2. Consequently, the values of the HFNs between different base stations are not synchronized. When the values of the HFNs between the LTE and the base station are not synchronized, or the values of the HFNs between different base stations are not synchronized, normal transmission of the multicast and broadcast service may be affected. Based on this, this embodiment of this application proposes a communication method. This can ensure normal transmission of the multicast and broadcast service when values of HFNs between a terminal device and an access network device are not synchronized or when values of HFNs between different access network devices are not synchronized.

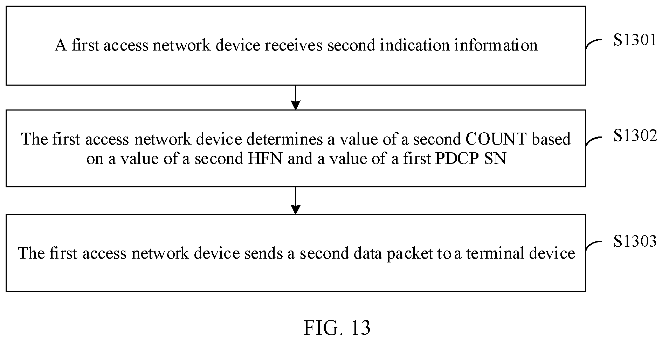

FIG. 13 is another schematic flowchart of the communication method according to this embodiment of this application. As shown in FIG. 13, the method includes the following steps S1301 and S1302.

S1301: A first access network device receives second indication information.

In some feasible implementations, the first access network device receives the second indication information. The second indication information indicates a value of a first COUNT of a data packet. The value of the first COUNT includes a value of a first HFN and a value of a first PDCP SN.

Specifically, in some feasible implementations, when a PDCP entity is reestablished, LTE needs to generate a PDCP status report and send the PDCP status report to the access network device, to notify, in a process of receiving data packets by the UE, the access network device of a data packet successfully received and a data packet failing to be received. In this case, the access network device may determine, based on the PDCP status report, a data packet to be transmitted/retransmitted to the UE. Generally, the PDCP status report includes a first missing COUNT (first missing COUNT, FMC), and the FMC indicates a value of the COUNT corresponding to a first missing data packet. To be specific, the FMC indicates a value of a PDCP SN and a value of an HFN that correspond to the first missing data packet. Therefore, that the first access network device receives the second indication information may be understood as that the first access network device receives the PDCP status report from the terminal device, where the PDCP status report includes the second indication information. The second indication information is the FMC, and indicates the value of the COUNT corresponding to the first missing data packet. To be specific, the value of the first COUNT is the value of the COUNT corresponding to the first missing data packet, the value of the first HFN included in the value of the first COUNT is the value of the HFN of the first missing data packet, and the value of the first PDCP SN is the value of the PDCP SN of the first missing data packet.

Optionally, in some feasible implementations, in a handover scenario, for example, when the UE is handed over from a second access network device to the first access network device, the second access network device usually needs to send sequence number status transfer information SN Status Transfer to the first access network device. The SN Status Transfer is used to notify the first access network device of a transmission status of the multicast and broadcast service of the UE on the second access network device. Generally, the SN Status Transfer needs to carry a value of a COUNT, and the value of the COUNT indicates a value of a COUNT of a next to-be-sent data packet. Therefore, that the first access network device receives the second indication information may be understood as that the first access network device receives the SN status transfer from the second access network device, where the SN Status Transfer includes the second indication information.

S 1302: The first access network device determines a value of a second COUNT based on a value of a second HFN and the value of the first PDCP SN.

In some feasible implementations, the first access network device may determine the value of the second COUNT based on the value of the second HFN and the value of the first PDCP SN. The value of the second HFN is a value of an HFN maintained by the first access network device, the value of the first PDCP SN is the value of the PDCP SN that is included in the value of the first COUNT, and the value of the second COUNT is a value of a COUNT of a second data packet. To be specific, in the PDCP entity reestablishment scenario, after the first access network device receives the PDCP status report from the terminal device, the first access network device cannot perform a data packet transmission/retransmission operation based on the value of the HFN in the FMC included in the PDCP status report, but needs to ignore the value of the HFN in the FMC, use, as the value of the COUNT corresponding to the first missing data packet, the value of the COUNT determined based on the value of the PDCP SN in the FMC and the value of the HFN currently maintained by the first access network device, and perform data packet transmission/retransmission. Optionally, in the handover scenario, after receiving the SN Status Transfer, the first access network device cannot set the value of the COUNT of the next to-be-transmitted data packet based on the value of the COUNT in the SN Status Transfer, but needs to ignore the value of the HFN that is carried in the value of the COUNT in the SN Status Transfer, use, as the value of the COUNT of the next to-be-transmitted data packet, the value of the COUNT determined based on the value of the PDCP SN in the FMC and the value of the HFN currently maintained by the first access network device, and perform data packet transmission.

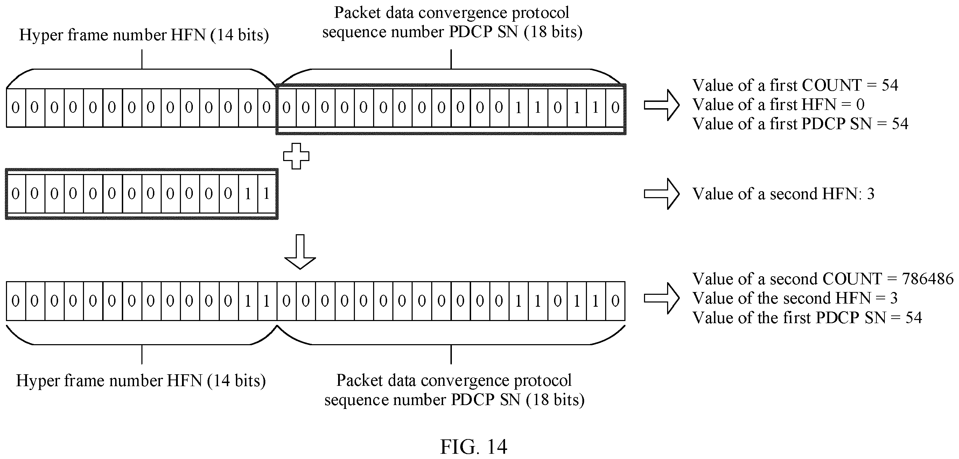

For example, FIG. 14 is a schematic diagram of an application scenario of determining the value of the second COUNT according to this embodiment of this application. As shown in FIG. 14, it is assumed that a length of the PDCP SN is 18 bits, a length of the HFN is 14 bits, the value of the first COUNT is 54 (that is, the value of the first HFN is 0, and the value of the first PDCP SN is 54), and the value of the HFN maintained by the first access network device is 3 (in other words, the value of the second HFN is 3). In this case, it may be determined, based on the value of the second HFN and the value of the first PDCP SN, that the value of the second COUNT is 786486 (in other words, 2¹⁸ × 3 + 54 = 786486). In other words, the value of the second COUNT of the second data packet is 786486.

S1303: The first access network device sends the second data packet to the terminal device.

In some feasible implementations, after determining the value of the second COUNT of the second data packet, the first access network device may send the second data packet to the terminal device based on the value of the second COUNT, and retransmit a missing data packet based on a transmission status of each data packet after the second data packet.

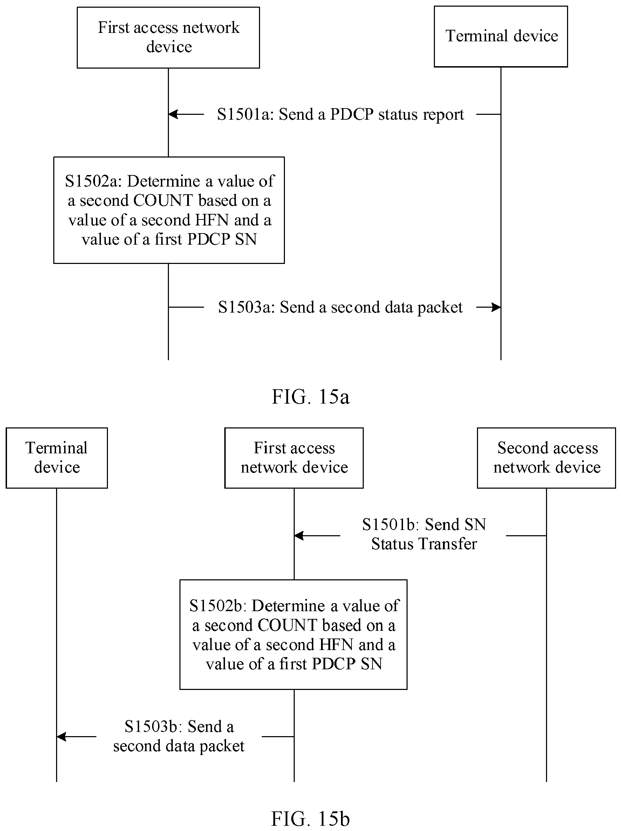

For example, FIG. 15a is a schematic diagram of a scenario in which values of HFNs between the access network device and the terminal device are not synchronized according to this embodiment of this application. It is assumed that an access network device (for example, the first access network device shown in FIG. 15a) has started to transmit a multicast and broadcast service for some UEs (for example, UE 1 and UE 2), and then another UE (for example, UE 3) joins receiving of a data packet of the multicast and broadcast service at a specific moment. Because the data packet sent by the first access network device to the terminal device carries only a PDCP SN but does not carry a corresponding HFN, the UE 3 starts to maintain a value of an HFN of the UE 3 from an initial value (for example, 0). However, in this case, because the multicast and broadcast service of the first access network device has been transmitted for a period of time, the value of the HFN maintained by the first access network device is greater than the initial value. Consequently, the value of the HFN maintained by the LTE 3 is not synchronized with the value of the HFN maintained by the first access network device. It may be understood that, in this scenario, if the first access network device and the UE 3 need to perform PDCP entity reestablishment due to some factors, the UE 3 (the terminal device shown in FIG. 15a) needs to generate a PDCP status report, and send the generated PDCP status report to the first access network device (step S1501a shown in FIG. 15a), to notify, in a process of receiving data packets by the UE 3, the first access network device of a data packet successfully received and a data packet failing to be received. In other words, the first access network device may determine, based on the PDCP status report, a data packet to be transmitted/retransmitted to the UE 3. The PDCP status report includes the FMC (namely, the value (namely, the value of the first COUNT) of the COUNT of the first missing data packet in the PDCP reordering window) and bitmap information. The bitmap information indicates, in subsequent data packets starting from the FMC, a missing data packet and a data packet correctly received by the PDCP entity. For example, a value of a first bit in a bitmap indicates a receiving status of a first data packet after the FMC. When the value of the bit is 0, it indicates that the first data packet is not correctly received. When the value of the bit is 1, it indicates that the first data packet is correctly received. A value of a second bit in the bitmap indicates a receiving status of a second data packet after the FMC. When the value of the bit is 0, it indicates that the second data packet is not correctly received. When the value of the bit is 1, it indicates that the second data packet is correctly received. The rest may be deduced by analogy. The first access network may determine, based on the FMC and the bitmap information, a data packet that is not correctly received in a process of receiving the multicast and broadcast service by the terminal device, to retransmit the data packet. It may be understood that because values of the HFNs between the UE 3 and the first access network device are not synchronized, after receiving the PDCP status report from the terminal device, the first access network device cannot perform a data packet transmission/retransmission operation based on the value of the HFN in the FMC, but needs to ignore the value of the HFN in the FMC, and use, as the value of the COUNT corresponding to the first missing data packet, a value obtained by adding the value of the PDCP SN in the FMC to the value of the HFN currently maintained by the first access network device, to perform data packet transmission/retransmission. Specifically, as shown in step S1502a and step S1503a in FIG. 15a, after the first access network device determines, based on the PDCP status report, the value (namely, the value of the first COUNT) of the COUNT that corresponds to the first missing data packet and that is maintained by the terminal device, the first access network device may determine, in the first access network device based on the value (namely, the value of the first PDCP SN) of the PDCP SN in the value of the first COUNT and the value (namely, the value of the second HFN) of the HFN currently maintained by the first access network device, the value (namely, the value of the second COUNT) of the COUNT that corresponds to the first missing data packet in the terminal device and that is maintained by the first access network device. Then, the first access network device may send, to the terminal device based on the determined value of the second COUNT, the data packet (namely, the second data packet, where the second data packet is the first missing data packet in the terminal device) corresponding to the value of the second COUNT, and send, to the terminal device, all other missing data packets in the terminal device other than the second data packet. It may be understood that all other missing data packets in the terminal device may be determined based on the second data packet and the bitmap information.

For another example, FIG. 15b is a schematic diagram of a scenario in which values of HFNs between different access network devices are not synchronized according to this embodiment of this application. It is assumed that an access network device (for example, the second network device shown in FIG. 15b) has started to transmit a multicast and broadcast service for some UEs (for example, UE 1 and UE 2), but another base station (the first network device shown in FIG. 15b) just starts to transmit the multicast and broadcast service at a specific moment. In this case, because the second access network device has performed the transmission for a period of time, a value of an HFN maintained by the second access network device may be greater than a value of an HFN maintained by the first access network device. Consequently, the values of the HFNs between the different access network devices are not synchronized. It may be understood that, generally, asynchronization of the values of the HFNs between the different access network devices has little impact on transmission of the multicast and broadcast service, because the different access network devices independently transmit the multicast and broadcast service. However, in a handover scenario, for example, when the LTE 1 is handed over from the second access network device to the first access network device, the second access network device needs to send SN Status Transfer to the first access network device (step S1501b shown in FIG. 15b). The SN Status Transfer is used to notify the first access network device of a transmission status of the multicast and broadcast service of the UE 1 on the second access network device. The SN Status Transfer includes a value of a COUNT, and the value of the COUNT indicates a value of a COUNT of a next to-be-transmitted data packet. However, because the values of the HFNs between the different access network devices are not synchronized, after receiving the SN Status Transfer, the first access network device cannot set the value of the COUNT of the next to-be-transmitted data packet based on the value of the COUNT in the SN Status Transfer, but needs to ignore the value of the HFN that is carried in the value of the COUNT in the SN Status Transfer, and use, as the value of the COUNT of the next to-be-transmitted data packet, a value obtained by adding the value of the PDCP SN to the value of the HFN currently maintained by the first access network device, to perform data packet transmission. Specifically, as shown in step S1502b and step S1503b in FIG. 15b, after the first access network device determines, based on the SN Status Transfer, the value (namely, the value of the first COUNT) of the COUNT that corresponds to the next to-be-transmitted data packet and that is maintained by the second access network device, the first access network device may determine, in the first access network device based on the value (namely, the value of the first PDCP SN) of the PDCP SN in the value of the first COUNT and the value (namely, the value of the second HFN) of the HFN currently maintained by the first access network device, the value (namely, the value of the second COUNT) of the COUNT that corresponds to the next to-be-transmitted data packet and that is maintained by the first access network device. Then, the first access network device may send, to the terminal device based on the determined value of the second COUNT, the data packet (namely, the second data packet, where the second data packet is the next to-be-transmitted data packet) corresponding to the value of the second COUNT, and continue to transmit data packets of the multicast and broadcast service starting from the second data packet (in other words, continue to transmit the data packets after the second data packet to the terminal device).

In this embodiment of this application, when the different access network devices (for example, the first access network device and the second access network device) set a same value of a PDCP SP in data packets (namely, same data packets or a same data packet) including same data content, if the value of the HFN maintained by the first access network device is not synchronized with the value of the HFN maintained by the terminal device, or if the value of the HFN maintained by the first access network device is not synchronized with the value of the HFN maintained by the second access network device, the first access network device may ignore the value of the HFN in the value of the COUNT included in the PDCP status report sent by the terminal device, and determine, based on the value of the PDCP SN in the value of the COUNT included in the PDCP status report and the value of the HFN maintained by the first access network device, the value of the COUNT actually corresponding to the first missing data packet, to perform data packet transmission/retransmission based on the newly determined value of the COUNT. Alternatively, the first access network device may ignore the value of the HFN in the value of the COUNT included in the SN Status Transfer sent by the second access network device, and determine, based on the value of the PDCP SN in the value of the COUNT included in the SN Status Transfer and the value of the HFN maintained by the first access network device, the value of the COUNT actually corresponding to the next to-be-transmitted data packet, to perform data packet transmission based on the newly determined value of the COUNT. Therefore, when the values of the HFNs between the terminal device and the access network device are not synchronized or when the values of the HFNs between the access network devices are not synchronized, normally transmission of the multicast and broadcast service can be implemented, and communication reliability and stability can be improved.

### Embodiment 4

It may be understood that, it is specified in a current communication protocol that a case in which a value of a COUNT is looped back is not allowed. In other words, a case in which the value of the COUNT increases again to change to 0 when the value of the COUNT reaches 2³²-1 is not allowed. Generally, to avoid the case in which the value of the COUNT is looped back, a solution is that an access network device reestablishes a PDCP entity before the value of the COUNT reaches a maximum value. It may be understood that, the value of the COUNT is reaccumulated from an initial value after the PDCP entity is reestablished. Because values of HFNs between different access network devices or values of HFNs between UE and an access network device may be not synchronized, in some cases (for example, when the UE is handed over), a value of a COUNT maintained by the UE may be greater than a value of a COUNT maintained by the access network device. In this case, the value of the COUNT of the UE is looped back before the access network device performs PDCP entity reestablishment, causing a behavior error of the UE. Based on this, this application proposes a communication method. According to the communication method, a case in which COUNT loopback occurs on the value of the COUNT of the UE earlier than that on the value of the COUNT of the access network device can be avoided, affecting transmission of a multicast and broadcast service.

FIG. 16 is another schematic flowchart of the communication method according to this embodiment of this application. As shown in FIG. 16, the method includes the following steps S1601 to S1603.

S1601: A terminal device determines a value of a third hyper frame number HFN.

In some feasible implementations, that the terminal device determines the value of the third HFN may be understood as that when the terminal device is handed over from a second access network device to a first access network device, the terminal device initializes a value of an HFN maintained by the terminal device, or the terminal device updates, to a preset value, a value of an HFN maintained by the terminal device, to obtain the value of the third HFN. It may be understood that initializing the value of the HFN maintained by the terminal device to obtain the value of the third HFN may be understood as setting the value of the HFN maintained by the terminal device to 0. In other words, the value of the third HFN is 0. The preset value may be specified in a protocol, implemented by the LTE, or preconfigured by a base station.

Optionally, in some feasible implementations, that the terminal device determines the value of the third HFN may alternatively be understood that the terminal device receives the value of the third HFN from the second access network device in a handover process in which the terminal device is handed over from a second access network device to a first access network device, where the value of the third HFN is a value of an HFN maintained by the first access network device. For a handover process in which the terminal device is handed over from the second access network device to the first access network device, refer to the handover procedure shown in FIG. 5. Details are not described herein again. It may be understood that, in this embodiment of this application, the first access network device is a target access network device (equivalent to the target base station shown in FIG. 5) of the terminal device, and the second access network device is a source access network device (equivalent to the source base station shown in FIG. 5) of the terminal device. In the handover process, the first access network device (namely, the target base station) may determine third indication information, where the third indication information indicates a value of an HFN maintained by the first access network device (namely, the value of the third HFN). Then, the first access network device may send the third indication information to the second access network device. After receiving the third indication information from the first access network device, the second access network device may send the value of the third HFN to the terminal device. In other words, the first access network device may send, to the terminal device through the second access network device, the value (namely, the value of the third HFN) of the HFN maintained by the first access network device. In this process, the second access network device may read or may not read the value of the third HFN.

Specifically, in the handover process, the third indication information may be carried in a handover request response message (the handover request response information shown in step ④ in FIG. 5) sent by the first access network device to the second access network device, to be sent to the second access network device. To be specific, in addition to parameters such as a C-RNTI of a new cell and a security-related algorithm of a target base station, the handover request response message sent by the first access network device to the second access network device may further include the third indication information. The third indication information indicates the value (namely, the value of the third HFN) of the HFN maintained by the first access network device. Correspondingly, after receiving the handover request response message from the first access network device, the second access network device may send a handover command to the terminal device. The handover command may include parameters (for example, the parameters such as the C-RNTI of the new cell, the security-related algorithm of the target base station, and the value of the third HFN indicated by the third indication information) included in the handover request response message. In other words, the second access network device may carry, in the handover command, the value of the HFN maintained by the first access network device, to send the handover command to the terminal device. Correspondingly, the terminal device receives the handover command from the second access network device, to obtain the value of the third HFN included in the handover command.

S1602: The terminal device receives a data packet from the first access network device.

In some feasible implementations, after the terminal device is handed over from the second access network device to the first access network device, the terminal device may continue to receive the data packet from the first access network device, in other words, continue to receive the data packet of a multicast and broadcast service. The data packet includes a value of a PDCP SN allocated by the first access network device to the data packet.

S1603: The terminal device determines, based on the value of the third HFN and the value of the PDCP SN, a value of a COUNT corresponding to the data packet.

In some feasible implementations, the terminal device may determine, based on the value of the third HFN and the value of the PDCP SN that is included in the data packet, the value of the COUNT corresponding to the data packet. In other words, after the terminal device is handed over from the second access network device to the first access network device, the terminal device may calculate a value of a COUNT for each received data packet starting from the value of the third HFN. It may be understood that after the terminal device is handed over from the second access network device to the first access network device, the value of the HFN maintained by the terminal device is updated to the value of the third HFN. In other words, the value of the HFN maintained by the LTE is the same as the value of the HFN maintained by the first access network device. In this way, in a process in which the terminal device receives the data packet from the first access network device, a case in which COUNT loopback occurs on the value of the COUNT of the terminal device faster/earlier than that on the value of the COUNT of the first access network device does not occur.

Optionally, in some feasible implementations, after the terminal device is handed over from the second access network device to the first access network device, in addition to updating, to the value of the third HFN, the value of the HFN maintained by the terminal device, to avoid the case in which COUNT loopback occurs on the value of the COUNT of the terminal device faster/earlier than that on the value of the COUNT of the first access network device, the terminal device may alternatively send fourth indication information to the first access network device after the terminal device is handed over from the second access network device to the first access network device and before the value of the COUNT of the terminal device reaches a maximum value of the COUNT (for example, reaches a preset value). The fourth indication information indicates that the value of the COUNT of the terminal device is about to reach the maximum value. Therefore, the first access network device may reestablish the PDCP entity, to avoid the case in which COUNT loopback occurs on the value of the COUNT of the terminal device faster/earlier than that on the value of the COUNT of the first access network device. Alternatively, the first access network device may send indication information to the UE, to indicate the UE to update a value to a smaller value of a COUNT or a smaller value of an HFN. For example, the value is updated to a value that is less than or equal to the value of the COUNT or the value of the HFN maintained by the base station, or updated to an initial value. This can avoid the case in which COUNT loopback occurs on the value of the COUNT of the terminal device faster/earlier than that on the value of the COUNT of the first access network device.

Optionally, in some feasible implementations, after the terminal device is handed over from the second access network device to the first access network device, before the value of the COUNT of the terminal device reaches the maximum value of the COUNT, the terminal device may alternatively initialize the value of the HFN or the value of the COUNT, or the terminal device updates the value of the HFN or the value of the COUNT to a preset value. The preset value may be specified in a protocol, implemented by the LTE, or preconfigured by a base station.

To be specific, after the terminal device is handed over from the second network device to the first network device, the terminal device may temporarily not update, to the value of the third HFN, the value of the HFN maintained by the terminal device, but first calculate a value of a corresponding COUNT for each data packet based on the value of the HFN originally maintained by the terminal device and the value of the PDCP SN included in the received data packet. Until a value of a COUNT corresponding to a specific data packet is equal to a preset value of a COUNT (for example, the preset value of the COUNT may be a maximum value of the COUNT, or the preset value of the COUNT may be a value that is less than the maximum value of the COUNT), the terminal device sends fourth indication information to the first network device. The fourth indication information indicates that the value of the COUNT of the terminal device reaches the maximum value or is about to reach the maximum value, to trigger the access device to perform a PDCP entity reestablishment operation, to avoid the case in which loopback occurs on the value of the COUNT. Alternatively, when a value of a COUNT corresponding to a specific data packet is equal to a preset value of a COUNT, the terminal device may perform an operation of initializing the value of the HFN of the terminal device, or perform an operation of updating the value of the HFN to a preset value.

In this embodiment of this application, to avoid the case in which loopback occurs on the value of the COUNT of the terminal device earlier than that on the value of the COUNT of the first access network device, Embodiment 4 provides the following several solutions.
① After the terminal device is handed over to a target access network device (namely, the first access network device), the terminal device immediately performs an HFN initialization process, to ensure that the value of the HFN maintained by the terminal device is not greater than the value of the HFN maintained by the target access network device.
② In a process in which the terminal device is handed over from a source access network device (namely, the second access network device) to a target access network device (namely, the first access network device), the target access network device may carry, in the handover request response message, the value of the HFN maintained by the target access network device, to send the handover request response message to the source access network device. Then, the source access network device sends, to the terminal device by using the handover command, the value of the HFN that is maintained by the target access network device and that is included in the handover request response message. Therefore, the terminal device may update, based on the value of the HFN included in the handover command, the value of the HFN maintained by the terminal device, to keep the value of the HFN maintained by the terminal device consistent /synchronized with the value of the HFN maintained by the target access network device. It may be understood that the data packet carries the value of the PDCP SN, and the value of the HFN maintained by the terminal device is synchronized/consistent with the value of the HFN maintained by the target access network device (which is equivalent to that the terminal device and the first access network device set the value of the COUNT of the same data packet to be synchronous/consistent). Therefore, the access network device may perform an operation of reestablishing the PDCP entity before the value of the COUNT of the access network device is looped back, so that the value of the COUNT is re-accumulated from the initial value.
③ After the terminal device is handed over to a target access network device, the terminal device may send the fourth indication information to the target access network device before the value of the COUNT reaches the maximum value, to notify the target access network device that the value of the COUNT of the terminal device reaches the maximum value. Therefore, the target access network device may reestablish the PDCP entity, or use another manner, to avoid the case in which loopback occurs on the value of the COUNT of the terminal device earlier than that on the value of the COUNT of the first access network device.
④ Each time after the terminal device is handed over to a target access network device, the terminal device may further initialize the value of the HFN or set the value of the HFN to a preset value before the value of the COUNT reaches the maximum value, to avoid the case in which loopback occurs on the value of the COUNT of the terminal device earlier than that on the value of the COUNT of the first access network device.

It may be understood that, compared with the solutions provided in the solution ③ and solution ④, in the solution ① and solution ②, after the terminal device is handed over from a second network device to a first network device, the terminal device updates the value of the HFN maintained by the terminal device (in other words, the value of the HFN maintained by the terminal device is set to the value of the third HFN), and then sets, starting from the value of the third HFN, a value of a COUNT for each data packet received after the terminal device is handed over to the first access network device. However, in the solution ③ and solution ④, after the terminal device is handed over from the second network device to the first network device, the terminal device does not immediately update the value of the HFN maintained by the terminal device, but still first sets a value of a COUNT, based on the value of the HFN originally maintained by the terminal device, for the data packet received from the first access network device, until a value of a COUNT of a specific data packet reaches a preset value of the COUNT, and then initializes the value of the HFN maintained by the terminal device (for example, the value of the HFN maintained by the terminal device is set to 0), or sets the value of the HFN to a preset value. Therefore, when the value of the HFN maintained by the terminal device is greater than the value of the HFN maintained by the access network device, normal transmission of the multicast and broadcast service can be implemented, and communication reliability and stability can be improved.

The following describes in detail communication apparatuses provided in this application with reference to FIG. 17 to FIG. 18.

FIG. 17 is a schematic diagram of a structure of a communication apparatus according to an embodiment of this application. The communication apparatus shown in FIG. 17 may be configured to perform some or all functions of the access network device in the method embodiment described in FIG. 7, FIG. 11, or FIG. 13. The apparatus may be an access network device (for example, a first access network device or a second access network device), or may be an apparatus in an access network device, or may be an apparatus that can be used together with an access network device. The communication apparatus may alternatively be a chip system. The communication apparatus shown in FIG. 17 may include a transceiver unit 1701 and a processing unit 1702. The processing unit 1702 is configured to perform data processing. A receiving unit and a sending unit are integrated into the transceiver unit 1701. The transceiver unit 1701 may also be referred to as a communication unit. Alternatively, the transceiver unit 1701 may be split into a receiving unit and a sending unit. The processing unit 1702 and the transceiver unit 1701 below are similar, and details are not described below again.

In an implementation, the transceiver unit 1701 is configured to receive first indication information from a core network device, where the first indication information indicates a value of a count COUNT of a first data packet, and the COUNT includes a hyper frame number HFN and a packet data convergence protocol sequence number PDCP SN; and
the processing unit 1702 is configured to determine the value of the COUNT of the first data packet based on the first indication information.

In another implementation, the transceiver unit 1701 is configured to receive second indication information, where the second indication information indicates a value of a first COUNT of a data packet, and the value of the first COUNT includes a value of a hyper frame number HFN and a value of a packet data convergence protocol sequence number PDCP SN;
the processing unit 1702 is configured to determine a value of a second COUNT based on a value of a second HFN and the value of the first PDCP SN; and
the transceiver unit 1701 is further configured to send a second data packet to a terminal device, where the value of the second COUNT is a value of a COUNT of the second data packet, and the value of the second HFN is a value of an HFN maintained by a first access network device.

In another implementation, the processing unit 1702 is configured to determine third indication information, where the third indication information indicates a value of a hyper frame number HFN maintained by a first access network device; and
the transceiver unit 1701 is configured to send the third indication information to a second access network device, where the first access network device is a target access network device of a terminal device, and the second access network device is a source access network device of the terminal device.

In another implementation, the transceiver unit 1701 is configured to receive third indication information from a first access network device, where the third indication information indicates a value of a hyper frame number HFN maintained by a first access network device; and
the transceiver unit 1701 is further configured to send, to a terminal device, the value of the HFN maintained by the first access network device, where the first access network device is a target access network device of the terminal device, and the second access network device is a source access network device of the terminal device.

In another implementation, the transceiver unit 1701 is configured to receive fifth indication information from a core network device, where the fifth indication information indicates a sequence of a third data packet in at least one data packet; and
the processing unit 1702 is configured to determine, based on the fifth indication information, a value of a packet data convergence protocol sequence number PDCP SN corresponding to the third data packet.

For another possible implementation of the communication apparatus, refer to related descriptions of functions of the access network device in the method embodiment corresponding to FIG. 7, FIG. 11, or FIG. 13. Details are not described herein again.

FIG. 17 is a schematic diagram of a structure of a communication apparatus according to an embodiment of this application. The communication apparatus shown in FIG. 17 may be configured to perform some or all functions of the terminal device in the method embodiment described in FIG. 11, FIG. 13, or FIG. 16. The apparatus may be a terminal device, or may be an apparatus in a terminal device, or may be an apparatus that can be used together with a terminal device. The communication apparatus may alternatively be a chip system. The communication apparatus shown in FIG. 17 may include a transceiver unit 1701 and a processing unit 1702.

In an implementation, the processing unit 1702 is configured to determine a value of a third hyper frame number HFN;
the transceiver unit 1701 is configured to receive a data packet from a first access network device, where the data packet includes a value of a packet data convergence protocol sequence number PDCP SN; and
the processing unit 1702 is configured to determine, based on the value of the third HFN and the value of the PDCP SN, a value of a COUNT corresponding to the data packet.

In another implementation, the transceiver unit 1701 is configured to: when a terminal device is handed over from a second access network device to a first access network device, send fourth indication information to the first access network device before a value of a COUNT of the terminal device reaches a maximum value of the COUNT, where the fourth indication information indicates that the value of the COUNT of the terminal device reaches the maximum value; or
the processing unit 1702 is configured to: before a value of a COUNT of the terminal device reaches a maximum value of the COUNT, initialize a value of a hyper frame number HFN of the terminal device, or update a value of an HFN to a preset value.

In another implementation, the processing unit 1702 is configured to determine a second value, where the second value is an effective length of a packet data convergence protocol sequence number PDCP SN; and
the processing unit 1702 is further configured to determine a size of a reordering window, and/or a length of a hyper frame number HFN, and/or a value range of the PDCP SN in a data packet based on the second value.

For another possible implementation of the communication apparatus, refer to related descriptions of functions of the terminal device in the method embodiment corresponding to FIG. 11, FIG. 13, or FIG. 16. Details are not described herein again.

FIG. 17 is a schematic diagram of a structure of a communication apparatus according to an embodiment of this application. The communication apparatus shown in FIG. 17 may be configured to perform some or all functions of the core network device in the method embodiment described in FIG. 7. The apparatus may be a core network device, an apparatus in a core network device, or an apparatus that can be used together with a core network device. The communication apparatus may alternatively be a chip system. The communication apparatus shown in FIG. 17 may include a transceiver unit 1701 and a processing unit 1702.

In an implementation, the processing unit 1702 is configured to determine first indication information. The first indication information indicates a value of a count COUNT of a first data packet, and the COUNT includes a hyper frame number HFN and a packet data convergence protocol sequence number PDCP SN.

The transceiver unit 1701 is configured to send the first indication information to an access network device.

For another possible implementation of the communication apparatus, refer to related descriptions of functions of the terminal device in the method embodiment corresponding to FIG. 7. Details are not described herein again.

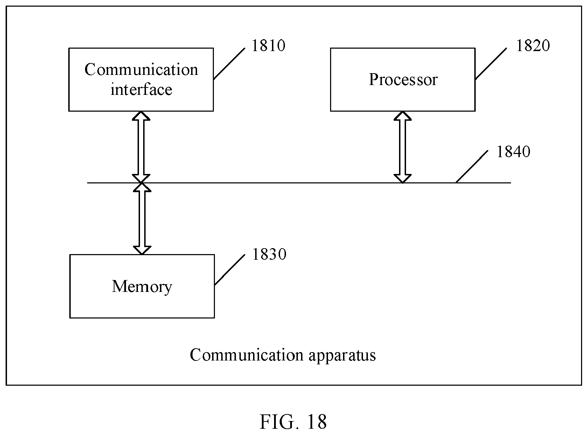

FIG. 18 is a schematic diagram of a structure of another communication apparatus according to an embodiment of this application. FIG. 18 shows a communication apparatus 180 according to this embodiment of this application. The communication apparatus 180 is configured to implement functions of the core network device in FIG. 7, FIG. 11, or FIG. 13. The apparatus may be a core network device or an apparatus used in a core network device. The apparatus used in the core network device may be a chip system or a chip in the core network device. The chip system may include a chip, or may include a chip and another discrete device.

Alternatively, the communication apparatus 180 is configured to implement functions of the terminal device in FIG. 11, FIG. 13, or FIG. 16. The apparatus may be a terminal device or an apparatus used in the terminal device. The apparatus used in the terminal device may be a chip system or chip in the terminal device.

Alternatively, the communication apparatus 180 is configured to implement functions of the core network device in FIG. 7. The apparatus may be a core network device or an apparatus used in a core network device. The apparatus used in the core network device may be a chip system or a chip in the core network device.

The communication apparatus 180 includes at least one processor 1820, configured to implement a data processing function of the access network device or the terminal device or the core network device in the methods provided in embodiments of this application. The apparatus 180 may further include a communication interface 1810, configured to implement receiving and sending operations of the terminal device or the access network device or the core network device in the methods provided in embodiments of this application. In this embodiment of this application, the communication interface may be a transceiver, a circuit, a bus, a module, or a communication interface of another type, and is configured to communicate with another device through a transmission medium. For example, the communication interface 1810 is used by an apparatus in the apparatus 180 to communicate with the another device. The processor 1820 receives and sends data through the communication interface 1810, and is configured to implement the method in FIG. 7, FIG. 11, FIG. 13, or FIG. 16 in the foregoing method embodiments.

The apparatus 180 may further include at least one memory 1830, configured to store program instructions and/or data. The memory 1830 is coupled to the processor 1820. The coupling in this embodiment of this application may be an indirect coupling or a communication connection between apparatuses, units, or modules, may be in an electrical, a mechanical, or another form, and is used for information exchange between the apparatuses, the units, or the modules. The processor 1820 may operate in cooperation with the memory 1830. The processor 1820 may execute the program instructions stored in the memory 1830. At least one of the at least one memory may be included in the processor.

After the apparatus 180 is powered on, the processor 1820 may read a software program in the memory 1830, interpret and execute instructions of the software program, and process data of the software program. When data needs to be sent wirelessly, the processor 1820 performs baseband processing on the to-be-sent data, and then outputs a baseband signal to a radio frequency circuit (not shown in the figure). The radio frequency circuit performs radio frequency processing on the baseband signal, and then sends out a radio frequency signal through the antenna in a form of an electromagnetic wave. When data is sent to the apparatus 180, the radio frequency circuit receives a radio frequency signal through the antenna, converts the radio frequency signal into a baseband signal, and outputs the baseband signal to the processor 1820. The processor 1820 converts the baseband signal into data, and processes the data.

In another implementation, the radio frequency circuit and the antenna may be disposed independent of the processor 1820 that performs baseband processing. For example, in a distributed scenario, the radio frequency circuit and the antenna may be disposed remotely and independent of the communication apparatus.

A specific connection medium between the communication interface 1810, the processor 1820, and the memory 1830 is not limited in this embodiment of this application. In this embodiment of this application, the memory 1830, the processor 1820, and the communication interface 1810 are connected to each other through a bus 1840 in FIG. 18. The bus is represented by a thick line in FIG. 18. Amanner of connection between other components is merely an example for description, and is not limited thereto. The bus may be classified into an address bus, a data bus, a control bus, and the like. For ease of representation, only one thick line is used to represent the bus in FIG. 18, but this does not mean that there is only one bus or only one type of bus.

When the apparatus 180 is specifically an apparatus used in the terminal device or the access network device or the core network device. For example, when the apparatus 180 is specifically a chip or a chip system, the communication interface 1810 may output or receive a baseband signal. When the apparatus 180 is specifically the access network device, the terminal device, or the core network device, the communication interface 1810 may output or receive a radio frequency signal. In this embodiment of this application, the processor may be a generalpurpose processor, a digital signal processor, an application-specific integrated circuit, a field programmable gate array or another programmable logic device, a discrete gate or a transistor logic device, or a discrete hardware component, and may implement or perform the methods, operations, and logical block diagrams disclosed in embodiments of this application. The generalpurpose processor may be a microprocessor, any conventional processor, or the like. The operations in the methods disclosed with reference to embodiments of this application may be directly implemented by a hardware processor, or may be implemented by a combination of hardware in the processor and a software module.

An embodiment of this application further provides a computer-readable storage medium. The computer-readable storage medium stores instructions. When the instructions are run on a processor, method procedures in the foregoing method embodiments are implemented.

An embodiment of this application further provides a computer program product. When the computer program product is run on a processor, method procedures in the foregoing method embodiments are implemented.

It should be noted that, for brief description, the foregoing method embodiments are represented as a series of action combinations. However, persons skilled in the art should appreciate that this application is not limited to the described order of the actions, because according to this application, some operations may be performed in other orders or simultaneously. It should be further appreciated by persons skilled in the art that embodiments described in this specification all belong to example embodiments, and the involved actions and modules are not necessarily required by this application.

Cross reference may be made to descriptions of the embodiments provided in this application, and the descriptions of embodiments have different focuses. For a part not described in detail in an embodiment, refer to related descriptions of another embodiment. For ease of description and brevity, for functions of the apparatuses and devices provided in embodiments of this application and operations performed by the apparatuses and devices, refer to related descriptions of the method embodiments of this application. The method embodiments and the apparatus embodiments may also be mutually referenced, combined, or cited.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A communication method, comprising:
receiving first indication information from a core network device, wherein the first indication information indicates a value of a count COUNT of a first data packet, and the COUNT comprises a hyper frame number HFN and a packet data convergence protocol sequence number PDCP SN; and
determining the value of the COUNT of the first data packet based on the first indication information.

2. The method according to claim 1, wherein the receiving first indication information from a core network device comprises:
receiving the first data packet from the core network device, wherein the first data packet comprises the first indication information.

3. The method according to claim 1 or 2, wherein the first indication information is carried in a first field, and a length of the first field is 32 bits.

4. The method according to claim 1 or 2, wherein the first indication information is carried in a second field and a third field, and the second field is a general packet radio service tunneling protocol-user plane sequence number GTP-U SN field, or the second field is a quality of service flow identifier sequence number QFI SN field.

5. The method according to claim 4, wherein a sum of lengths of the second field and the third field is 32 bits.

6. A communication method, comprising:
determining first indication information, wherein the first indication information indicates a value of a count COUNT of a first data packet, and the COUNT comprises a hyper frame number HFN and a packet data convergence protocol sequence number PDCP SN; and
sending the first indication information to an access network device.

7. The method according to claim 6, wherein the sending the first indication information to an access network device comprises:
sending the first data packet to the access network device, wherein the first data packet comprises the first indication information.

8. The method according to claim 6 or 7, wherein the first indication information is carried in a first field, and a length of the first field is 32 bits.

9. The method according to claim 6 or 7, wherein the first indication information is carried in a second field and a third field, and the second field is a general packet radio service tunneling protocol-user plane sequence number GTP-U SN field, or the second field is a quality of service flow identifier sequence number QFI SN field.

10. The method according to claim 9, wherein a sum of lengths of the second field and the third field is 32 bits.

11. A communication apparatus, wherein the communication apparatus is an access network device and comprises:
a transceiver unit, configured to receive first indication information from a core network device, wherein the first indication information indicates a value of a count COUNT of a first data packet, and the COUNT comprises a hyper frame number HFN and a packet data convergence protocol sequence number PDCP SN; and
a processing unit, configured to determine the value of the COUNT of the first data packet based on the first indication information.

12. The apparatus according to claim 1, wherein the transceiver unit is specifically configured to:
receive the first data packet from the core network device, wherein the first data packet comprises the first indication information.

13. The apparatus according to claim 1 or 12, wherein the first indication information is carried in a first field, and a length of the first field is 32 bits.

14. The apparatus according to claim 1 or 12, wherein the first indication information is carried in a second field and a third field, and the second field is a general packet radio service tunneling protocol-user plane sequence number GTP-U SN field, or the second field is a quality of service flow identifier sequence number QFI SN field.

15. The apparatus according to claim 14, wherein a sum of lengths of the second field and the third field is 32 bits.

16. A communication apparatus, wherein the communication apparatus is a core network device and comprises:
a processing unit, configured to determine first indication information, wherein the first indication information indicates a value of a count COUNT of a first data packet, and the COUNT comprises a hyper frame number HFN and a packet data convergence protocol sequence number PDCP SN; and
a transceiver unit, configured to send the first indication information to an access network device.

17. The apparatus according to claim 16, wherein the transceiver unit is specifically configured to:
send the first data packet to the access network device, wherein the first data packet comprises the first indication information.

18. The apparatus according to claim 16 or 17, wherein the first indication information is carried in a first field, and a length of the first field is 32 bits.

19. The apparatus according to claim 16 or 17, wherein the first indication information is carried in a second field and a third field, and the second field is a general packet radio service tunneling protocol-user plane sequence number GTP-U SN field, or the second field is a quality of service flow identifier sequence number QFI SN field.

20. The apparatus according to claim 19, wherein a sum of lengths of the second field and the third field is 32 bits.

21. A communication apparatus, comprising a processor, wherein the processor is configured to execute a computer program or instructions stored in at least one memory, so that the apparatus implements the method according to any one of claims 1 to 5, or implements the method according to any one of claims 6 to 10.

22. A computer-readable storage medium, wherein the storage medium stores a computer program or instructions, and when the computer program or the instructions is/are run by a computer, the method according to any one of claims 1 to 5 is implemented, or the method according to any one of claims 6 to 10 is implemented.

23. A computer program product, wherein the computer program product comprises computer program code, and when the computer program code is run on a computer, the method according to any one of claims 1 to 5 is implemented, or the method according to any one of claims 6 to 10 is implemented.
